# EUROPEAN PATENT APPLICATION

(11) **EP 3 605 302 A1**
(43) Date of publication of application: **05.02.2020**
(21) Application number: 18775809.9
(22) Date of filing: 14.02.2018
(51) Int. Cl.: G06F 3/0488, G06F 3/0354, G06F 3/044

(54) **TOUCH-OPERATED DEVICE, METHOD FOR OPERATION AND PROGRAM FOR OPERATION THEREOF, AND INFORMATION PROCESSING SYSTEM USING TOUCH-OPERATED DEVICE**

(30) Priority: 29.03.2017 JP 2017065953
(71) Applicant: FUJIFILM Corporation, Tokyo 106-8620 (JP)
(72) Inventor: KITAGAWA, Yusuke, Tokyo 107-0052 (JP); USAMI, Yoshihisa, Tokyo 107-0052 (JP); TSUKAMOTO, Naoki, Tokyo 107-0052 (JP); OKABE, Yuki, Tokyo 107-0052 (JP)
(74) Representative: Klunker IP Patentanwälte PartG mbB
(86) International application number: PCT/JP2018/005041
(87) International publication number: WO 2018/179943

(57) **Abstract**

A touch type operation apparatus, a method, a program, and an information processing system using the touch type operation apparatus capable of securing versatility by facilitating adaptation of a plurality of application programs in a touch type operation apparatus having a three-dimensional solid shape are provided.

A touch panel control unit (32) controls a touch panel (21) including a solid region 22. A gesture determination unit (32A) obtains solid shape information from a solid shape information table (71), specifies a content of a gesture operation with respect to the touch panel (21) based on the solid shape information, and generates gesture specification information. An AP interface unit (33) transmits the gesture specification information to the AP execution unit (41) and receives response information from the AP execution unit (41). A display control unit (32B) controls display of the touch panel (21) based on the received response information.

## Description

### BACKGROUND OF THE INVENTION

### 1. Field of the Invention

The present invention relates to a touch type operation apparatus, an operation method and an operation program of the same, and an information processing system using the touch type operation apparatus.

### 2. Description of the Related Art

A touch type operation apparatus such as a touch panel display that comprises a touch sensor and is operated on an operation screen displayed on a display is known (refer to JP2014-535086A).

While the shape of the display panel or the touch sensor of the touch panel display is generally a flat surface panel, a flat surface panel having a partially curved shape is developed using a flat surface panel having flexibility as disclosed in JP2014-535086A. In addition to curving the flat surface as in JP2014-535086A, a touch panel display in which a touch sensor or a display panel is shaped as a three-dimensional solid shape such as a cylindrical shape is suggested (JP2015-228118A).

### SUMMARY OF THE INVENTION

Considering various shapes of touch type operation apparatuses as in JP2014-535086A and JP2015-228118A, designing the shape based on human engineering can provide a user with comfortable operability or improve work efficiency. Particularly, as the shape of the touch sensor or the display panel becomes more complicated as in JP2015-228118A than the shape obtained by simply curving the flat surface as in JP2014-535086A, operability using the characteristics of the solid shape can be provided, or an application using the solid shape is considered.

In the development of the touch type operation apparatus having a solid shape, a new problem arises unlike the flat surface panel. Types of gesture operations providing an operation input with respect to the flat surface panel include a tap operation of tapping an icon on the operation screen, a swipe operation for switching a screen or a page, a pinch operation of enlarging and reducing the screen or the page, and the like. Since the shape of the touch sensor or the display panel is a two-dimensional plane, coordinate information in the flat surface is enough for specifying such general types of gesture operations in the flat surface panel.

In the case of a three-dimensional solid shape as disclosed in JP2015-228118A, outer peripheral surfaces are configured with a plurality of surfaces. Thus, simply with only the coordinate information in each flat surface, the type of gesture operation cannot be specified, and an operation command corresponding to the type of gesture operation cannot be determined. The touch type operation apparatus having a three-dimensional solid shape has a complicated method of specifying the gesture operation. Thus, both the touch type operation apparatus having a three-dimensional solid shape and an application program adapting to the touch type operation apparatus are developed together, and versatility is sacrificed. Versatility means that one touch type operation apparatus is used in a plurality of application programs, or conversely, one application program is used in a plurality of touch type operation apparatuses.

Along with advances in development of connected cars and Internet of things (IOT) connectable to the Internet, various apparatuses are connected to the Internet, and various types of application programs having different applications are expected to be used using one touch type operation apparatus. In addition to the application programs, the touch type operation apparatus is expected to have various solid shapes, and one application program is expected to be used in various types of touch type operation apparatuses. In order to effectively use various types of application programs and touch type operation apparatus in combination, a system that secures versatility is important.

An object of the present invention is to provide a touch type operation apparatus, an operation method and an operation program of the same, and an information processing system using the touch type operation apparatus capable of securing versatility by facilitating adaptation of a plurality of application programs in a touch type operation apparatus having a three-dimensional solid shape.

In order to resolve the above object, a touch type operation apparatus of the present invention comprises a touch sensor, a solid shape information obtaining unit, a gesture specification information generation unit, an application program interface unit, and a display control unit. The touch sensor has a three-dimensional solid shape. The solid shape information obtaining unit accesses a storage unit storing solid shape information related to the solid shape of the touch sensor and obtains the solid shape information. The gesture specification information generation unit specifies a content of a gesture operation performed with respect to the touch sensor based on the solid shape information and generates gesture specification information representing the specified content of the gesture operation. The application program interface unit communicates with an application execution unit executing an application program which uses the touch sensor as an input apparatus based on the gesture specification information and receives response information from the application execution unit. The display control unit controls display of a display based on the received response information.

It is preferable that the application execution unit executes an application program obtained by external communication or executes an application program provided as an application service from a server.

It is preferable that the application program interface unit transmits the gesture specification information to the application execution unit.

It is preferable that the display is integrated with the touch sensor and has the same solid shape as the touch sensor, and the display control unit performs the display control by performing transformation processing corresponding to the solid shape of the display on the response information received from the application execution unit.

It is preferable that the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and the response information includes information related to a response screen displayed as a processing result of processing executed by the application execution unit based on the gesture specification information and display position information related to a display position of the response screen.

It is preferable that the solid shape information further includes outer peripheral surface attribute information representing whether the outer peripheral surface is a flat surface or curved.

It is preferable that the application program interface unit determines an operation command with respect to the application program based on the gesture specification information and the solid shape information and transmits the operation command to the application execution unit.

It is preferable that the display is integrated with the touch sensor and has the same solid shape as the touch sensor, and the display control unit performs the display control by performing transformation processing corresponding to the solid shape of the display on the response information received from the application execution unit.

It is preferable that the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and the response information includes information related to a response screen displayed as a processing result of processing executed by the application execution unit based on the operation command and display position information related to a display position of the response screen.

It is preferable that the solid shape information further includes outer peripheral surface attribute information representing whether the outer peripheral surface is a flat surface or a curved surface.

An information processing system of the present invention using a touch type operation apparatus is an information processing system comprising the touch type operation apparatus, and an application program execution unit that executes an application program which uses the touch type operation apparatus as an input apparatus, in which the touch type operation apparatus comprises a touch sensor, a solid shape information obtaining unit, a gesture specification information generation unit, an application program interface unit, and a display control unit. The touch sensor has a three-dimensional solid shape. The solid shape information obtaining unit accesses a storage unit storing solid shape information related to the solid shape of the touch sensor and obtains the solid shape information. The gesture specification information generation unit specifies a content of a gesture operation performed with respect to the touch sensor based on the solid shape information and generates gesture specification information representing the specified content of the gesture operation. The application program interface unit communicates with an application execution unit executing an application program which uses the touch sensor as an input apparatus based on the gesture specification information and receives response information from the application execution unit. The display control unit controls display of a display based on the received response information.

It is preferable that the information processing system further comprises an application information obtaining unit that accesses a server distributing the application program or a server providing the application program as an application service and obtains the application program or information related to the application program.

It is preferable that the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and the response information includes information related to a response screen displayed as a processing result of processing executed by the application execution unit based on an operation command and display position information related to a display position of the response screen.

It is preferable that the information processing system further comprises an API information provision unit that provides the solid shape information to an API publication server publishing application program interface information to a developer developing the application program.

An operation method of a touch type operation apparatus of the present invention is an operation method of a touch type operation apparatus comprising a touch sensor having a three-dimensional solid shape. The method comprises a solid shape information obtaining step of accessing a storage unit storing solid shape information related to the solid shape of the touch sensor and obtaining the solid shape information, a gesture specification information generation step of specifying a content of a gesture operation performed with respect to the touch sensor based on the solid shape information and generating gesture specification information representing the specified content of the gesture operation, a communication step of communicating with an application execution unit executing an application program which uses the touch sensor as an input apparatus based on the gesture specification information and receiving response information from the application execution unit, and a display control step of controlling display of a display based on the received response information.

An operation program of a touch type operation apparatus of the present invention is an operation program of a touch type operation apparatus comprising a touch sensor having a three-dimensional solid shape. The program comprises a solid shape information obtaining step of accessing a storage unit storing solid shape information related to the solid shape of the touch sensor and obtaining the solid shape information, a gesture specification information generation step of specifying a content of an operation gesture performed with respect to the touch sensor based on the solid shape information and generating specified gesture specification information, a communication step of communicating with an application execution unit executing an application program which uses the touch sensor as an input apparatus based on the gesture specification information and receiving response information from the application execution unit, and a display control step of controlling display of a display based on the received response information.

According to the present invention, the application program interface unit communicating with the application execution unit based on the gesture specification information corresponding to the solid shape is comprised in the touch type operation apparatus. Thus, one touch type operation apparatus is easily adapted to a plurality of application programs, or conversely, one application program is easily adapted to a plurality of touch type operation apparatuses. Versatility can be secured.

### BRIEF DESCRIPTION OF THE DRAWINGS

Fig. 1 is a schematic diagram illustrating an overall configuration of a console system comprising a touch type operation apparatus.
Fig. 2 is a descriptive diagram of a map display screen displayed on a touch panel.
Fig. 3 is a descriptive diagram of a menu screen displayed on the map display screen.
Fig. 4 is a descriptive diagram of a state where volume adjustment is performed in the map display screen.
Fig. 5 is a descriptive diagram of a current location display function in the map display function.
Fig. 6 is a perspective exterior view of a solid region of a first embodiment.
Fig. 7 is a descriptive diagram of a step in a rough solid shape region.
Fig. 8 is a plan view of the solid region.
Figs. 9A to 9D are descriptive diagrams of a method of manufacturing the solid region.
Fig. 10 is a descriptive diagram of combining a touch sensor and a display having solid shapes.
Fig. 11 is a descriptive diagram of a tap operation with respect to the solid region.
Fig. 12 is a descriptive diagram of a rotation operation with respect to the solid region.
Figs. 13A and 13B are descriptive diagrams of a lateral stroke operation with respect to the solid region.
Figs. 14A and 14B are descriptive diagrams of a vertical pinch operation with respect to the solid region.
Fig. 15 is a block diagram illustrating a schematic configuration of a touch panel control unit.
Fig. 16 is a descriptive diagram illustrating an example of gesture specification information related to a single tap.
Fig. 17 is a descriptive diagram illustrating an example of the gesture specification information related to the rotation operation.
Fig. 18 is a descriptive diagram illustrating an example of the gesture specification information related to a truncated pyramid.
Fig. 19 is a descriptive diagram illustrating an example of the gesture specification information related to a slide with respect to the truncated pyramid.
Fig. 20 is a descriptive diagram of a state where an image of a ring is displayed on a flat surface panel.
Fig. 21 is a descriptive diagram of a state where the same image as Fig. 20 is displayed in a solid region 22.
Fig. 22 is a flowchart of the touch panel control unit.
Fig. 23 is a flowchart of an AP execution unit.
Fig. 24 is a schematic configuration diagram of a touch type operation apparatus of a second embodiment.
Fig. 25 is a block diagram illustrating a schematic configuration of a touchpad control unit and the like of the second embodiment.
Fig. 26 is a block diagram illustrating a schematic configuration of a touch panel control unit and the like of a third embodiment.
Fig. 27 is a flowchart of the touch panel control unit of the third embodiment.
Fig. 28 is a flowchart of an AP execution unit of the third embodiment.
Fig. 29 is a block diagram illustrating a schematic configuration of a touchpad control unit and the like of a fourth embodiment.
Fig. 30 is a descriptive diagram of an information processing system of a fifth embodiment.
Fig. 31 is a descriptive diagram of an information processing system of a sixth embodiment.
Fig. 32 is a descriptive diagram of a touch panel including a plurality of recessed portions.
Fig. 33 is a plan view of the touch panel in Fig. 32.
Fig. 34 is a descriptive diagram of API information related to menu items.

### DESCRIPTION OF THE PREFERRED EMBODIMENTS

### "First Embodiment"

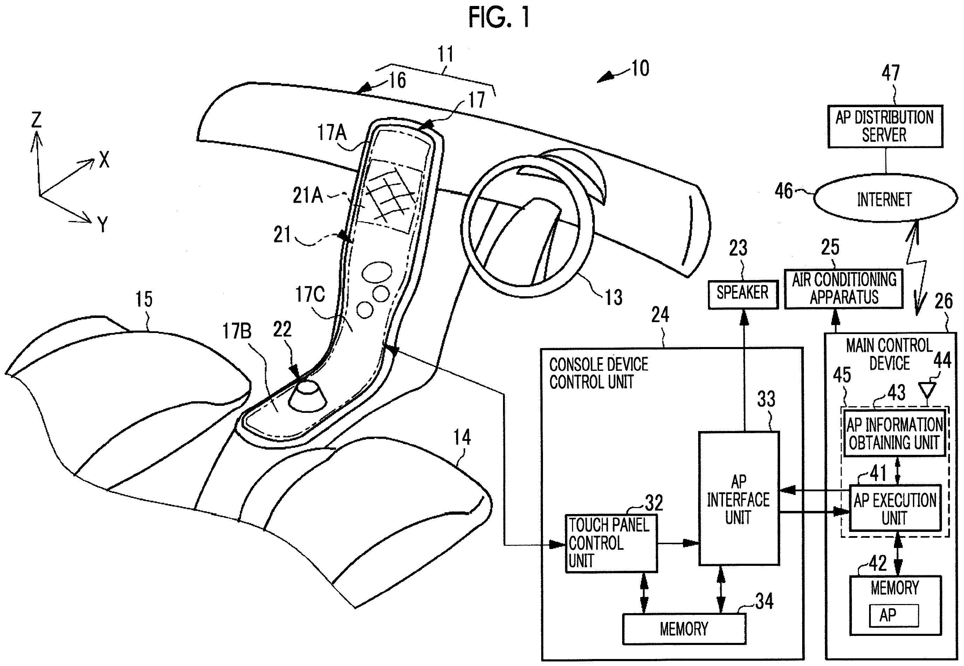

In Fig. 1, a touch type operation apparatus according to an embodiment of the present invention is used in a console system 10. The console system 10 is used in an instrument panel 11 of an automobile. The console system 10 is a system controlling various vehicle-mounted application programs (AP) such as a navigation system providing traveling route guidance, an audio-visual (AV) system playing back music and videos, and an air conditioning system controlling an air conditioning apparatus 25 in the automobile.

The instrument panel 11 includes, for example, a dashboard 16 extending in an approximately horizontal direction to a passenger seat 15 side from a driving seat 14 side in which a steering wheel 13 is arranged, and a center console 17 arranged between the driving seat 14 and the passenger seat 15.

The center console 17 comprises a lower part 17B arranged between the seat surfaces of the driving seat 14 and the passenger seat 15 and an upper part 17A raised upward from the lower part. The upper part 17A is connected to the dashboard 16 in the upper end portion thereof. For example, decorative plates that smoothly connect both of the parts 17A and 17B are disposed in the upper part 17A and the lower part 17B of the center console 17. A surface 17C of each of the parts 17A and 17B is a stepless connected surface.

The console system 10 is configured with a touch panel display (hereinafter, simply referred to as the touch panel) 21, a speaker 23, a console device control unit 24, and a main control device 26. Besides, an operation unit (not illustrated) configured with a mechanical switch is connected to the console system 10. The touch panel 21 and the console device control unit 24 constitute the touch type operation apparatus according to the embodiment of the present invention.

As previously known, the touch panel 21 is a device that is configured with a thin display such as a liquid crystal display (LCD) or an organic electroluminescence (EL) display and a touch sensor arranged on a screen of the display and can receive an input of an operation instruction by a touch operation through an operation screen displayed on the display. A display region of the touch panel 21 extends on the whole surface of the center console 17 and has a size and a shape extending to the lower part 17B from the upper part 17A of the center console 17. That is, the whole surface 17C of the center console 17 functions as the touch sensor and the display.

As illustrated in Fig. 1, the touch panel 21 has a three-dimensional solid shape. The surface 17C is configured with a flat surface, a stepless smooth curved surface, a protruding region and a recessed region having steps, and the like. The touch panel 21 comprises a truncated cone solid region 22 in the lower part 17B as the protruding region. The solid region 22 also comprises the display and the touch sensor and functions as the touch panel.

For example, a map display screen displaying a map of the navigation system and the operation screen for operating various APs such as the AV system are displayed on the touch panel 21. In addition, contents videos such as television broadcasts and movies are played back, and videos and the like having a decorative display effect are displayed on the touch panel 21. The map display screen and the main operation screen are displayed in a main display region 21A disposed in the upper part 17A.

The speaker 23 outputs various types of audio such as guidance of the navigation system, music played back by the AV system, and operation guidance of each AP. The operation guidance includes a sound effect representing reception of an operation, audio of reading a title of a selected menu item, and the like.

The console device control unit 24 comprises a touch panel control unit 32, an AP interface unit 33, and a memory 34.

The touch panel control unit 32 controls the display of the touch panel 21 and receives an input of an operation instruction through the touch operation with respect to the touch panel 21. The touch panel control unit 32 inputs an operation signal representing the received operation instruction into the AP interface unit 33. In addition, the touch panel control unit 32 receives response information such as a process result in response to the operation instruction from the AP interface unit 33 and controls the display of the touch panel 21 depending on the response information. Accordingly, the AP uses the touch panel 21 as an input apparatus for the operation signal.

The AP interface unit 33 communicates with an AP execution unit 41 of the main control device 26 and receives the response information from the AP execution unit 41 based on the operation signal input from the touch panel control unit 32. The AP interface unit 33 transmits the received response information to the touch panel control unit 32 or the speaker 23. In a case where the response information received from the AP execution unit 41 is screen information, the AP interface unit 33 transmits the response information to the touch panel control unit 32. In a case where the response information is audio information, the AP interface unit 33 transmits the response information to the speaker 23. That is, the AP interface unit 33 is an interface that relays information necessary for the processes of APs between the touch panel control unit 32 and the AP execution unit 41.

The touch panel control unit 32 and the AP interface unit 33 are accessibly connected to the memory 34. As will be described below, the memory 34 stores information that is referred to in the execution of the process of each of the units 32 and 33.

The main control device 26 manages and controls each unit of the automobile including the console system 10. The main control device 26 comprises the AP execution unit 41, a memory 42, and an AP information obtaining unit 43. The AP execution unit 41 is implemented using a central processing unit (CPU) 45. The CPU 45 functions as the execution unit 41 for each AP by loading and executing various APs such as the navigation system, the AV system, and the air conditioning system. In addition, the touch type operation apparatus configured with the touch panel 21 and the console device control unit 24, and the main control device 26 including the AP execution unit 41 constitute an information processing system according to the embodiment of the present invention.

The AP execution unit 41 is communicably connected to the AP interface unit 33 through a connector. The AP execution unit 41 transmits the operation screen for operating each AP to the AP interface unit 33 in order to display the operation screen on the touch panel 21. The AP execution unit 41 receives the operation signal input through an operation on the operation screen using the touch panel 21 or the solid region 22 from the AP interface unit 33 and executes a process corresponding to the received operation signal.

For example, the content of the process of each AP is as follows. In a case where the navigation system is started, the AP execution unit 41 executes a navigation process as follows. As the navigation process, first, a current location display process of displaying the current location of the automobile is executed. In the current location display process, the AP execution unit 41 determines the current location of the automobile based on a GPS signal obtained by a global positioning system (GPS) device, not illustrated, and transmits the map display screen corresponding to the current location to the AP interface unit 33.

In addition, as the navigation process, the AP execution unit 41 performs a destination setting process of implementing a destination setting function. In the destination setting process, in a case where the AP execution unit 41 receives an execution request for a route search process from the current location to a destination as the operation signal of the navigation system from the AP interface unit 33, the AP execution unit 41 executes the route search process by referring to a map database and the like. A search result is transmitted to the AP interface unit 33 as the response information. In a case where the destination is set by selecting a route, the AP execution unit 41 starts a guidance process of guiding the automobile along the route. In the guidance process, the AP execution unit 41 constantly transmits guidance information such as a guidance display screen and audio guidance corresponding to the current location of the automobile to the AP interface unit 33.

In addition, the AP execution unit 41 executes an accommodation search process of implementing an accommodation search function as the process of the navigation system. In a case where the AP execution unit 41 receives a search request for accommodations (for example, a gas station, a convenience store, and a hotel) near the current location as the operation signal, the AP execution unit 41 executes the accommodation search process by referring to an accommodation information database and the like and transmits a search result to the AP interface unit 33 as the response information.

In addition, the AP execution unit 41 starts the AV system and executes an AV process as follows. The AV process includes a playback process of receiving television broadcasting or radio broadcasting and playing back the received broadcasting and a playback process of playing back music or videos recorded in recording media such as a compact disc (CD) and a digital versatile disc (DVD). In addition, the console system 10 comprises an auxiliary (AUX) terminal that is a terminal to which an external apparatus such as a portable music player is connected. The console system 10 can perform a process of outputting a music played back in the external apparatus from the speaker 23.

The AP execution unit 41 transmits a video and audio of the television broadcasting and the radio broadcasting, a video and audio of the recording media and the external apparatus, and the like to the AP interface unit 33 as playback information for output from the touch panel 21 and the speaker 23. In a case where the AP execution unit 41 receives a channel selection request for the television broadcasting or the radio broadcasting from the AP interface unit 33, the AP execution unit 41 switches to the requested channel. In addition, in a case where the AP execution unit 41 receives a volume change request from the AP interface unit 33, the AP execution unit 41 adjusts the volume of the speaker 23 to the specified volume through the AP interface unit 33.

The AP execution unit 41 starts the air conditioning system and executes an air conditioning process of controlling the air conditioning apparatus 25 in the automobile. In a case where the AP execution unit 41 receives an adjustment request for adjusting the airflow amount or the temperature from the AP interface unit 33, the AP execution unit 41 executes a process of adjusting the airflow amount or the temperature by transmitting a control signal to the air conditioning apparatus 25.

In addition, in a case where an operation of channel selection or volume adjustment in the AV process or airflow amount adjustment or temperature adjustment in the air conditioning process is performed, the AP execution unit 41 performs a process of switching the screen of the touch panel 21 or changing a display content. Specifically, the AP execution unit 41 transmits the screen information to be displayed to the AP interface unit 33 as the response information.

The AP execution unit 41 supports multitasking and can execute a plurality of APs in parallel at the same time. For example, in a case where the main control device 26 is started by switching ON a main switch such as an ignition switch of the automobile, the navigation system is started. Then, the AV system and the air conditioning system are started based on the operation instruction, and each AP is executed in parallel at the same time. The memory 42 of the main control device 26 stores program data of the AP loaded in the AP execution unit 41, reference information referred to by the AP execution unit 41 in the execution of the AP, and the like.

In addition, the AP execution unit 41 can execute an externally obtained AP in addition to the preinstalled AP. The main control device 26 comprises a communication function of connecting to the Internet 46 and can download various APs from an AP distribution server 47 connected to the Internet 46.

In the case of downloading the AP, the AP execution unit 41 displays an AP selection screen as the operation screen on the touch panel 21 and receives a selection request from a user of the AP to be downloaded through the AP interface unit 33. The AP execution unit 41 transmits the received selection request to an AP information obtaining unit 43. The AP information obtaining unit 43 connects to the Internet 46 through a wireless communication unit 44 configured with an antenna, a transfer control circuit, and the like, accesses the AP distribution server 47, and obtains the AP from the AP distribution server 47. The AP information obtaining unit 43 is also implemented by loading and executing an operation program functioning as the main control device 26 by the CPU 45.

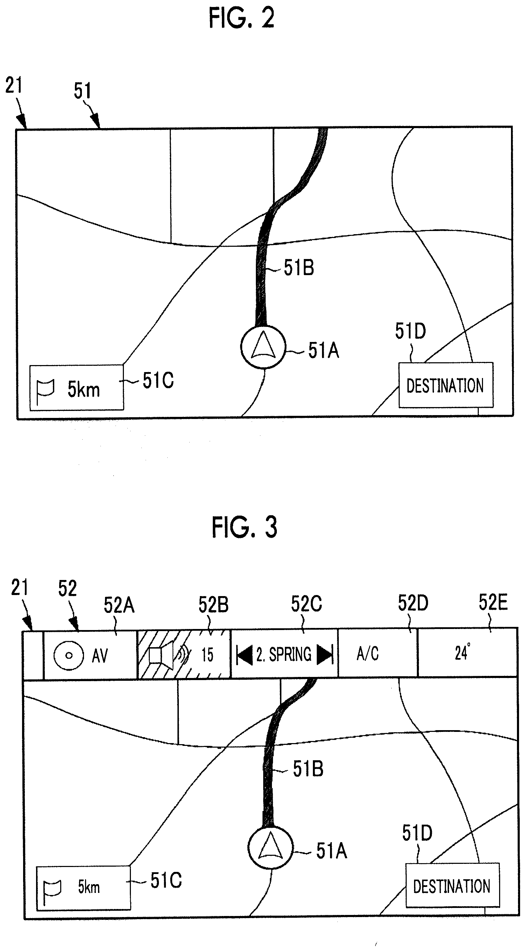

Fig. 2 to Fig. 5 illustrate examples of the operation screen for each AP displayed on the touch panel 21. The screens are mainly displayed in the main display region 21A. In Fig. 2, a map display screen 51 displaying the map of the navigation system is an initial screen of the operation screen and is displayed in a case where, for example, the main switch of the automobile is switched ON. The map display screen 51 displays a surrounding map depending on the current location of the automobile. In a reference state, the map display screen 51 is displayed such that the current location is positioned at almost the center of the screen.

A current location mark 51A displaying the current location of the automobile, a route 51B to the set destination, a distance 51C to the destination, a destination setting button 51D, and the like are displayed on the map display screen 51.

In the touch panel 21, in a case where the touch operation of tapping the destination setting button 51D is performed, the screen transitions to a destination setting screen (not illustrated) from the map display screen 51. An input box for the destination and a keyboard and the like for setting the destination from a telephone number, an address, an accommodation name, and the like are displayed on the destination setting screen. In a case where the destination is set, the navigation system performs a route search, and the searched route 51B is displayed on the map display screen 51.

Fig. 3 illustrates a menu screen 52 displayed on the map display screen 51. In a case where the screen of the touch panel 21 is tapped in the state illustrated in Fig. 2, the menu screen 52 is inserted and displayed in the upper portion of the map display screen 51. For example, the menu screen 52 has a laterally long stripe shape. Menu items corresponding to various functions operable in each AP such as the navigation system, the AV system, and the air conditioning system are displayed in the menu screen 52. The menu items are displayed as operation buttons.

An AV menu button 52A is an operation button that calls a main menu enabling the operation of all functions of the AV system. A volume adjustment button 52B is an operation button for adjusting the volume of the speaker 23. A music selection button 52C is an operation button for performing music selection of selecting a music to be played back such as switching the music being played back to the previous or subsequent music in the AV system. The volume adjustment and the music selection are functions having a high frequency of use among the functions of the AV system. While the volume adjustment and the music selection can be operated from the menu screen, the volume adjustment button 52B and the music selection button 52C are dedicated buttons disposed for simplifying the operation of a function having a high frequency of use.

In addition, an air conditioner (A/C) menu button 52D is an operation button that calls a main menu enabling the operation of all functions of the air conditioning system. A temperature adjustment button 52E is an operation button for adjusting a target temperature. In the same manner as the volume adjustment button 52B and the like of the AV system, the temperature adjustment button 52E is a dedicated button disposed for a function having a high frequency of use. While illustration is not provided, dedicated buttons of the air conditioning system include an airflow amount adjustment button for adjusting the airflow amount.

In addition, while illustration is not provided, a main menu button is present on the menu screen 52. In a case where the main menu button is operated, a main menu (not illustrated) for setting or operating all functions of the navigation system, the AV system, and the air conditioning system is displayed. In a case where the main menu is displayed, for example, the screen transitions from the map display screen 51.

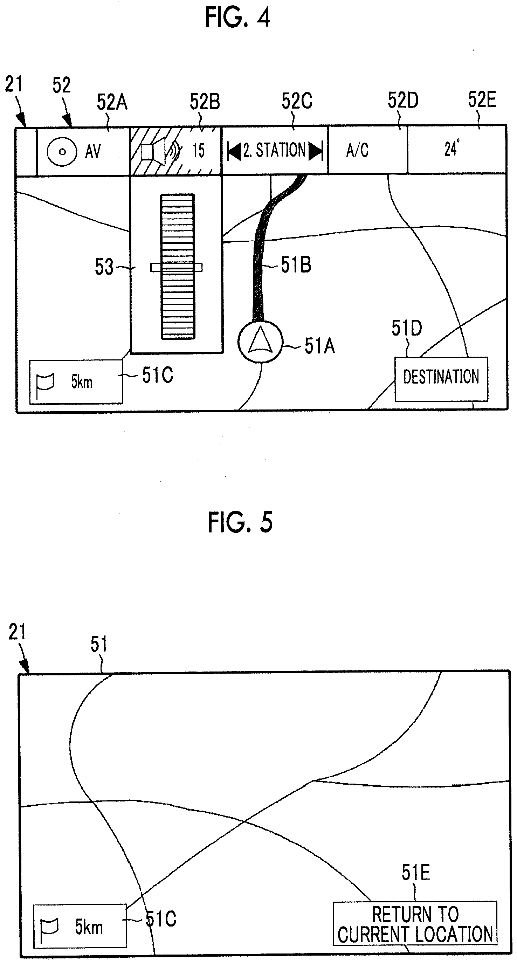

As illustrated in Fig. 4, for example, in a case where the volume adjustment button 52B is tapped on the menu screen 52, a volume adjustment bar 53 is displayed in a pull-down manner below the volume adjustment button 52B. In a case where a cursor is slid to a desired volume position by performing the touch operation on the volume adjustment bar 53, the volume is adjusted. The operation of other operation buttons is basically the same.

In addition, as illustrated in Fig. 5, in a case where the display is changed by moving the location from the display of the reference state where the current location is positioned at the center in the map display screen 51, a return button 51E is displayed in the lower right part of the screen. A text "return to the current location" representing a function is displayed on the return button 51E. In a case where the return button 51E is tapped, a return is made to the current location display (refer to Fig. 2) in the reference state where the current location is positioned at the center of the screen.

The operation screen of the console system 10 is operated through the touch operation with respect to the touch panel 21 on which the operation screen is displayed. As described above, while the operation screen is mainly displayed in the main display region 21A, the console system 10 can be operated through the touch operation with respect to the solid region 22 in addition to the touch operation with respect to the main display region 21A.

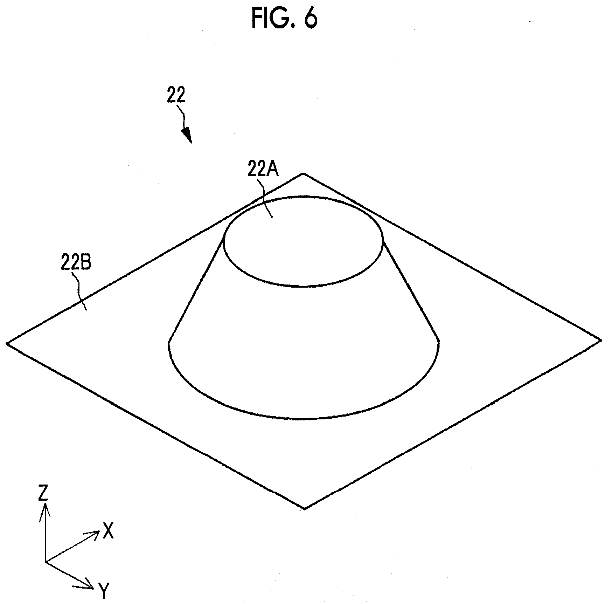

As illustrated in Fig. 6, the solid region 22 comprises a truncated cone portion 22A and a surrounding flat surface portion 22B. The solid region 22 illustrated in Fig. 6 is illustrated by taking the truncated cone portion 22A and the surrounding flat surface portion 22B out of the touch panel 21. In actuality, the flat surface portion 22B is connected to other regions of the touch panel 21.

As described above, the truncated cone portion 22A is a protruding region and is included in a rough solid shape region. The rough solid shape region refers to a protruding region or a recessed region in which at least a part of a boundary with an adjacent region is defined by a step. The step refers to a step such that the boundary can be sensed (touched) by touching with a hand. Specifically, it is preferable that the step has a height greater than or equal to the thickness of a finger (approximately 10 mm).

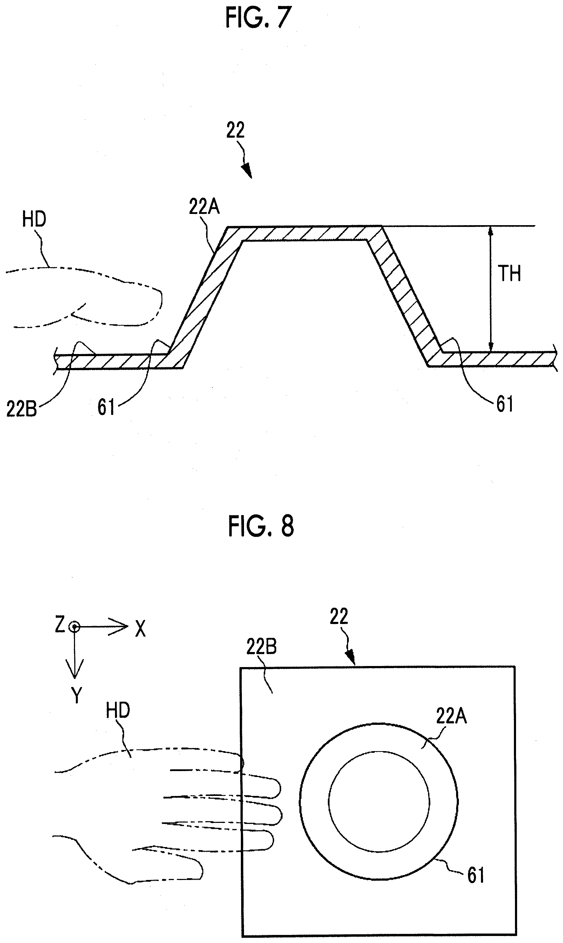

As illustrated in Fig. 7 and Fig. 8, the whole periphery of the truncated cone portion 22A is a boundary with a flat surface region of the flat surface portion 22B which is the adjacent region. The boundary is defined by a step 61 formed between the truncated cone portion 22A and the flat surface portion 22B. The truncated cone portion 22A is a protruding region having a protruding shape with respect to the adjacent region. The step 61 has a height TH greater than or equal to the thickness of a finger of a hand HD. The rough solid shape region is distinguished from a stepless curved surface region. The curved surface region is a region formed on a bent surface obtained such that a flat surface panel is curved.

In the case of the solid region 22 comprising the rough solid shape region such as the truncated cone portion 22A, an operator can recognize the location of the truncated cone portion 22A or recognize which part of the truncated cone portion 22A is touched through sense of touch with the hand HD without using vision. The input of the operation instruction can be received in the solid region 22 through various gesture operations as will be described below. Thus, by using the solid region 22, for example, a driver sitting in the driving seat 14 can operate the AP without using vision.

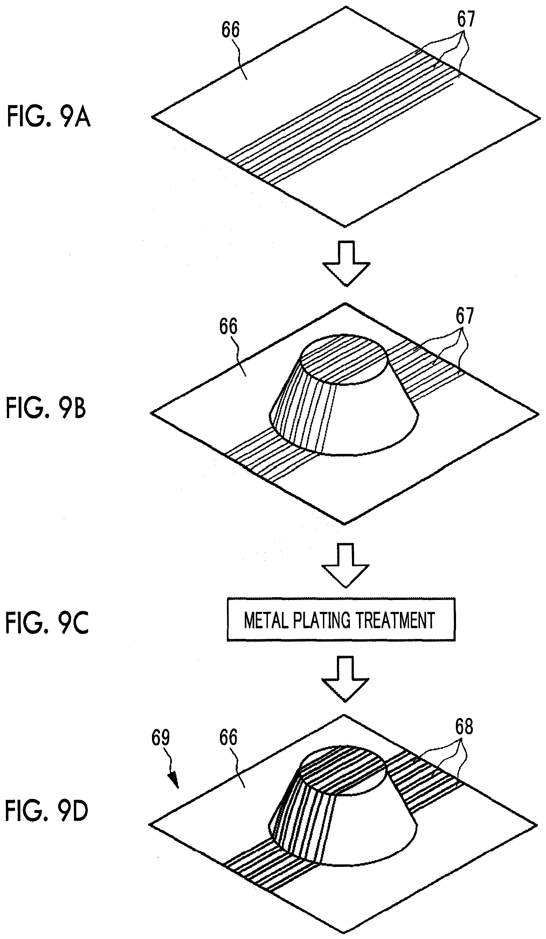

The touch panel 21 including the solid region 22 comprises, for example, an electrostatic capacitive type touch sensor that can perform multipoint detection of detecting a plurality of touch positions in an operation region at the same time. For example, a three-dimensional solid shape touch sensor including the rough solid shape region such as the solid region 22 can be manufactured using a manufacturing method disclosed in JP2016-213435A. Details of materials and the manufacturing method disclosed in JP2016-213435A are briefly summarized in Figs. 9A to 9D.

As illustrated in Fig. 9A, first, a plated layer 67 is formed on a flat substrate 66 having two principal surfaces of a surface and a rear surface. The plated layer 67 is formed as a base of metal plating constituting a transparent electrode. The metal plating constitutes a metal layer forming a signal line for detecting a touch position. The plated layer 67 is formed in a stripe shape on the surface of the substrate 66. While illustration is not provided, the plated layer 67 is also formed on the rear surface of the substrate 66 in a stripe shape in a direction orthogonal with respect to the surface. Accordingly, the plated layer 67 is formed in a matrix shape on the surface and the rear surface together.

The plated layer 67 is a compound having a functional group and the like interacting with a plating catalyst and the like and is, for example, the carboxylic acid group or the cyano group. The substrate 66 is a substrate that can be molded in a three-dimensional shape. The substrate 66 is made of a transparent resin such as polyethylene terephthalate (PET). The plated layer 67 is formed on the substrate 66 using a printing method such as screen printing.

As illustrated in Fig. 9B, after the plated layer 67 is formed, the substrate 66 is formed in a three-dimensional solid shape. The molding method uses a well-known heated processing method such as vacuum molding and blow molding.

As illustrated in Fig. 9C, after the substrate 66 is deformed into a three-dimensional solid shape, metal plating treatment is performed. In the metal plating treatment, the deformed substrate 66 is immersed in a plating liquid. The plating liquid forms a metal layer on the plated layer 67. The metal layer is a signal line 68 constituting the transparent electrode. In a case where the metal plating treatment is performed, a touch sensor 69 having a three-dimensional solid shape is completed. Various processes such as forming a surface protective layer are performed on the touch sensor 69, and components such as a signal processing integrated circuit (IC) are attached to the touch sensor 69.

A feature of the manufacturing method illustrated in Figs. 9A to 9D is that after deforming the substrate 66 on which the plated layer 67 is formed into a desired three-dimensional solid shape, a patterned metal layer is formed by performing the metal plating treatment. Generally, the metal layer has a small rupture elongation. In a case where the substrate 66 is deformed into a three-dimensional solid shape after disposing the metal layer on the substrate 66, the metal layer may not follow the elongation of the substrate 66 and may be ruptured. More specifically, in a case where a flat surface sheet in a state where the metal layer is formed is slightly curved, the rupture of the metal layer does not pose a problem. However, in a case where the flat surface sheet after forming the metal layer is bent in order to form a solid shape including a step such as the rough solid shape region, the amount of deformation of the metal layer is increased. Thus, the metal layer may be ruptured.

In the manufacturing method illustrated in Figs. 9A to 9D, the metal layer is formed in the metal plating treatment after the substrate 66 on which the plated layer 67 is formed is deformed. Thus, the rupture of the metal layer is prevented. Thus, the manufacturing method illustrated in Figs. 9A to 9D is effective in the case of forming a three-dimensional solid shape touch sensor including the rough solid shape region.

As previously known, in the electrostatic capacitive type touch sensor, a very low voltage is applied to the signal line 68 formed in a matrix shape in the initial state. In a case where the finger of the hand HD comes into contact with the touch sensor, an electrostatic capacitance at the touch position changes. The signal line 68 having a change in voltage is specified by detecting the change in voltage corresponding to the change in electrostatic capacitance. Since the signal line 68 is arranged in a matrix shape, the signal line 68 in an X direction and the signal line 68 in a Y direction intersecting with each other at the touch position are specified, and the touch position is detected.

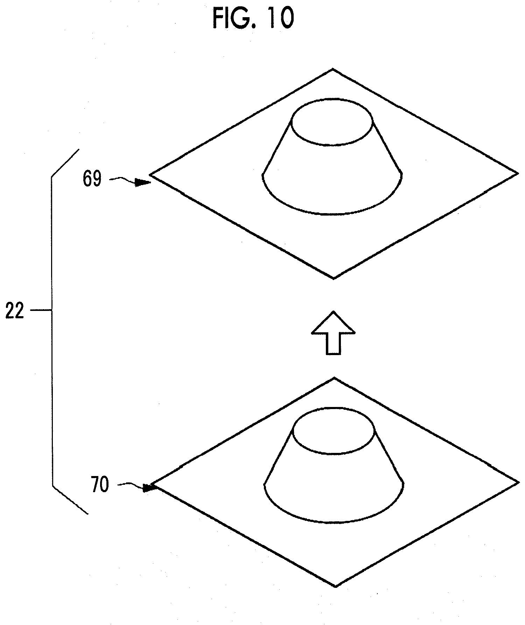

In addition, as illustrated in Figs. 9A to 9D, a transparent resin is used in the substrate 66, and the signal line 68 is also formed as the transparent electrode. Thus, as illustrated in Fig. 10, by combining and integrating the touch sensor 69 and a display 70 such as an LCD or an organic EL display formed in the same shape as the touch sensor 69, the solid region 22 functioning as a touch panel having a three-dimensional solid shape is completed.

While Figs. 9A to 9D and Fig. 10 illustrate only a part of the solid region 22 for simplification of description, the touch panel 21 extending on the whole surface of the center console 17 may be manufactured as a single unit. The touch panel 21 may be manufactured by dividing the touch panel 21 into a plurality of parts. In addition, while the width of the signal line 68 is relatively largely illustrated in Figs. 9A to 9D for convenience of description, the actual width of the signal line 68 is very small. For example, considering the case of using the substrate 66 as a touch panel comprising a display function, the signal line 68 is very thin wiring such that the opening ratio of a display pixel of the touch panel is approximately 90%.

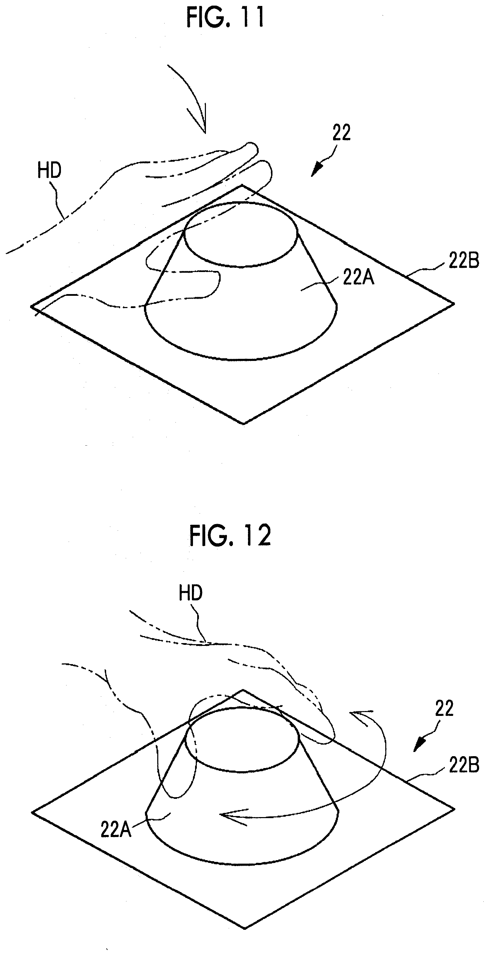

Fig. 11 to Fig. 14B illustrate examples of the gesture operations with respect to the solid region 22. Fig. 11 illustrates a tap operation that is a gesture operation of patting the surface of the truncated cone portion 22A of the solid region 22 with the hand HD. The tap operation includes, for example, a single tap of patting once and a double tap of consecutively patting twice.

For example, the double tap is assigned to an operation of calling the menu screen 52 and an operation of the current location display. For example, in a case where the double tap is performed on the solid region 22 in a state where the map display screen 51 is displayed as illustrated in Fig. 2, the menu screen 52 is displayed. In addition, in a case where the double tap is performed in a case where the display of the map display screen 51 is changed from the reference state as illustrated in Fig. 5, a return is made to the current location display.

For example, the single tap is assigned to a function of confirming selection of a menu item. In a case where the single tap is performed in a state where a menu item of any function is selected in the menu screen 52, the selection of the menu screen is confirmed.

Fig. 12 illustrates a gesture operation of touching the truncated cone portion 22A such as grabbing with two or more fingers including the index finger and the thumb of the hand HD from above the truncated cone portion 22A, and in this state, rotating the hand HD leftward and rightward along the outer periphery of the truncated cone portion 22A. The gesture operation illustrated in Fig. 12 is referred to as a rotation operation.

For example, the rotation operation is assigned to a menu item selection operation in the menu screen 52. In a case where the menu screen 52 is displayed, a cursor is displayed at the position of any menu item. In a case where the rotation operation is performed, the cursor sequentially moves, and a menu item is selected.

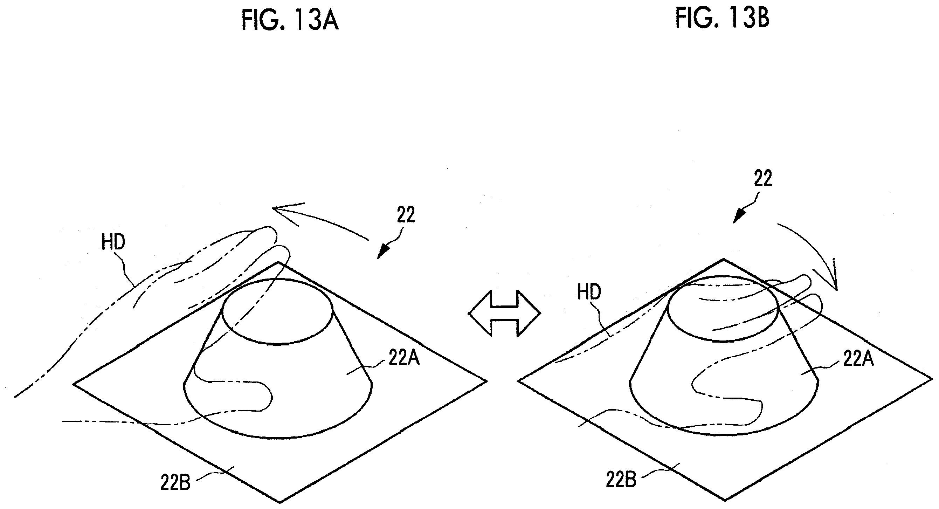

Figs. 13A and 13B illustrate a gesture operation of touching the outer peripheral surface of the truncated cone portion 22A with one or more fingers including the index finger, and in this state, rubbing the outer peripheral surface of the truncated cone portion 22A such as swinging the hand HD leftward and rightward. This gesture operation is a gesture of reciprocating the hand HD in the lateral direction between the state illustrated in Fig. 12A and the state illustrated in Fig. 12B and thus, is referred to as a lateral stroke.

For example, the lateral stroke is assigned to the operation of the airflow amount adjustment and the temperature adjustment in the air conditioning system and the operation of the volume adjustment and the music selection in the AV system. In a case where the lateral stroke is performed after the selection of the menu item such as the temperature adjustment or the volume adjustment is confirmed in the menu screen 52, the temperature or the volume is changed.

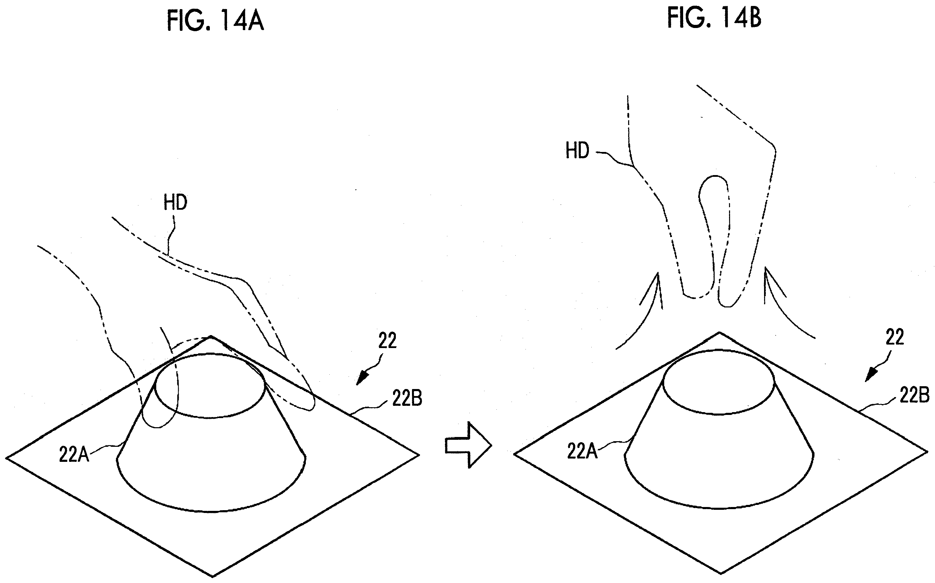

Figs. 14A and 14B illustrate a gesture operation of pinching the outer peripheral surface of the truncated cone portion 22A with the hand HD and sliding the hand HD in the vertical direction as illustrated in Fig. 14B from a state of touching the truncated cone portion 22A such as grabbing with two or more fingers including the index finger and the thumb of the hand HD as illustrated in Fig. 14A. The gesture operation illustrated in Figs. 14A and 14B is referred to as a vertical pinch.

For example, the vertical pinch is assigned to an operation of closing the menu screen 52. In a case where the vertical pinch is performed in a state where the menu screen 52 is displayed on the map display screen 51, the display of the menu screen 52 is finished, and the menu screen 52 is closed.

In the present example, the types of gesture operations with respect to the solid region 22 and the assignment of the function to each gesture operation are for illustrative purposes. Types and assignment other than described above are also considered. For example, the tap operation, a slide operation, and the like with respect to the flat surface portion 22B and not the truncated cone portion 22A may be set distinctively from the gesture operations with respect to the truncated cone portion 22A.

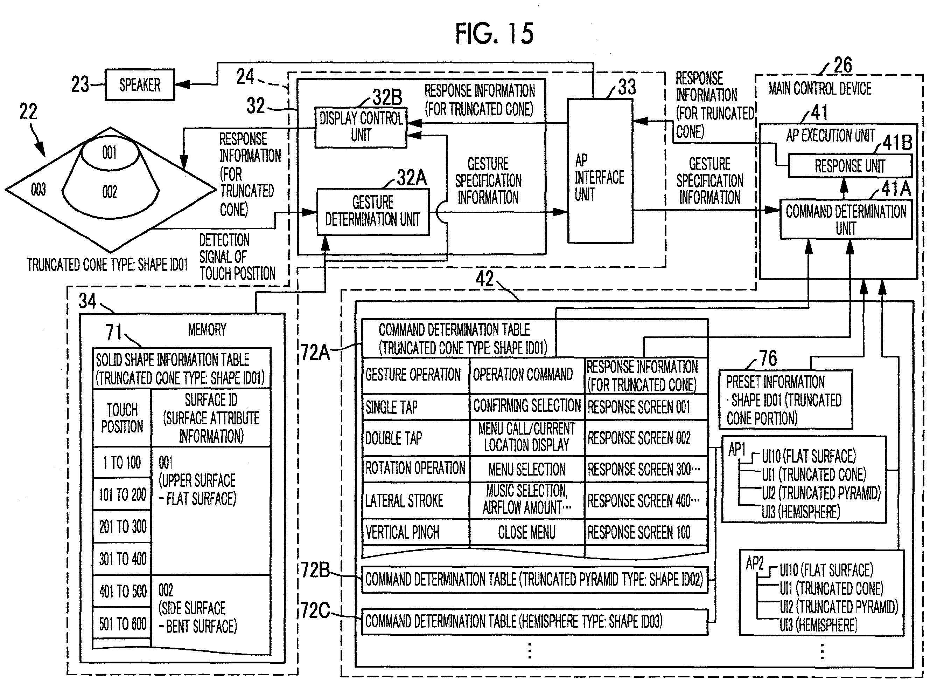

Fig. 15 is a block diagram illustrating a schematic configuration of the touch panel control unit 32. The touch panel control unit 32 comprises a gesture determination unit 32A and a display control unit 32B. In a case where a gesture operation which is the touch operation is performed on the solid region 22, the gesture determination unit 32A determines the gesture to which the gesture operation corresponds.

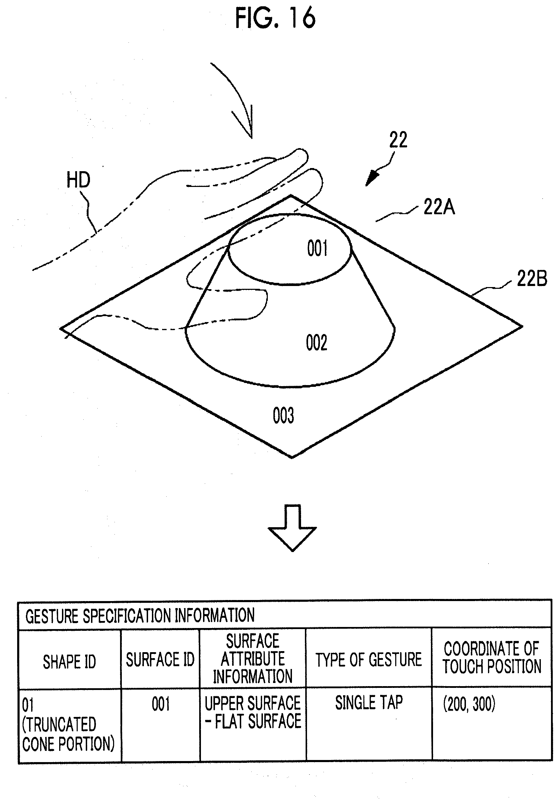

In Fig. 16, for simplification of description, processing of the touch operation received through the solid region 22 which is a featured part of the present invention in the touch panel 21 will be described as an example. While the touch panel control unit 32 actually controls the whole touch panel 21 including the solid region 22, processing of the touch operation received through the flat surface region and the curved surface region other than the solid region 22 in the touch panel 21 is the same as processing of a typical touch panel having a flat surface panel and thus, will not be described.

In a case where the touch operation is performed on the solid region 22, a detection signal corresponding to the touched touch position is input into the gesture determination unit 32A. The detection signal is the output from matrix wiring disposed in the operation region of the solid region 22 and configured with each signal line 68 in the X direction and the Y direction. The detection signal represents the coordinates of an intersection between each signal line 68 in the X direction and the Y direction and corresponding to the touch position. Thus, the gesture determination unit 32A can specify the touch position in the solid region 22 from the detection signal.

The memory 34 that is a storage unit stores solid shape information table 71. A correspondence between the touch position and each portion of the solid shape is recorded in the solid shape information table 71 depending on the solid shape of the solid region 22. The gesture determination unit 32A reads solid shape information by accessing the memory 34 and referring to the solid shape information table 71. The gesture determination unit 32A functions as a solid shape information obtaining unit that obtains the solid shape information related to the solid shape of the touch sensor by accessing the memory 34 which is a storage unit.

The gesture determination unit 32A functions as a gesture specification information generation unit that specifies the content of the gesture operation by referring to the solid shape information table 71 and generates gesture specification information representing the specified content of the gesture operation based on the detection signal.

First, the solid shape information includes a shape identification data (ID). The shape ID is information for identifying the solid shape included in the solid region 22. The solid shape of the solid region 22 is a truncated cone, and "01" is assigned as the shape ID representing the truncated cone.

In addition, coordinates specified as the touch position in the matrix wiring of the solid region 22 based on the detection signal are recorded in the solid shape information table 71. While the touch position is represented by an identification number "1 to 100" for simplification in Fig. 15, the actual data is coordinate information specified based on a terminal number and the like of a signal processing IC to which each signal line 68 in the X direction and the Y direction is connected. In the solid shape information table 71, the identification number of the touch position and a surface ID of the solid shape are stored in association with each other.

For example, the surface ID is information for identifying each surface in a case where the outer peripheral surface of the solid shape is configured with a plurality of surfaces. The solid region 22 has three surfaces including an upper surface and a side surface on the outer peripheral surface of the truncated cone portion 22A and a surface corresponding to the flat surface portion 22B. In the present example, "001", "002", and "003" are assigned to the surface ID of the upper surface of the truncated cone portion 22A, the surface ID of the side surface, and the surface ID of the flat surface portion 22B, respectively.

In addition to the surface ID, outer peripheral surface attribute information (hereinafter, simply referred to as the surface attribute information) is recorded in the solid shape information table 71. For example, the surface attribute information is information as to whether each surface constituting the outer peripheral surface is the upper surface or the side surface of the truncated cone. In addition, the surface attribute information includes information representing whether each surface is a flat surface or a bent surface. In addition, not only a bent surface having a high curvature such as the side surface of the truncated cone due to processing is present, but also a curved surface having a low curvature is formed by slightly curving the flat surface portion 22B. The surface attribute information also includes information as to whether each surface is a flat surface or a curved surface obtained by slightly curving a flat surface. In the case of using information indicating a bent surface or a curved surface, it is preferable to add information related to the curvature. In order to appropriately display an image on the bent surface or the curved surface, it may be desirable to perform an image correction process such as coordinate transformation corresponding to the curvature. Thus, in the case of using the information representing the bent surface as the surface attribute information, it is preferable to include the curvature in the surface attribute information.

The gesture determination unit 32A can specify the type of solid shape and the surface on which the touch operation is performed based on the identification number (coordinate information) of the touch position, the shape ID, the surface ID, and the surface attribute information. While one ID is assigned to one surface in the present example, one surface may be divided into a plurality of blocks, and an ID may be assigned to each block. By doing so, it is possible to specify the block to which the touch position belongs in one surface.

In a case where a gesture operation such as the rotation operation illustrated in Fig. 12 or the lateral stroke illustrated in Figs. 13A and 13B is performed, a plurality of positions are consecutively touched. In this case, the detection signal representing the touch position is consecutively input into the gesture determination unit 32A. The gesture determination unit 32A records the trajectory of the touch position based on the consecutively input detection signals and specifies the content of the gesture operation such as whether the gesture operation is the rotation operation or the lateral stroke from the recorded trajectory.

In addition, in the case of the tap operation illustrated in Fig. 11, a local detection signal of one location is input. In a case where the detection signal from the same location is input twice within a predetermined amount of time, it is determined that the double tap is performed.

As described above, the gesture determination unit 32A generates the gesture specification information representing the specified content of the gesture operation. The gesture specification information includes the shape ID of the solid region 22, the surface ID, the surface attribute information, the type of gesture operation, the coordinates of the touch position, and the like.

Fig. 16 to Fig. 19 illustrate examples of the gesture specification information. As illustrated in Fig. 16, in a case where the solid region 22 is the truncated cone portion 22A and the gesture operation is the single tap with respect to the upper surface, the content of the gesture operation is such that the shape ID is "01" representing the truncated cone portion 22A, the surface ID is "001" representing the upper surface, the surface attribute information indicates "upper surface" and "flat surface", the type of gesture operation is the single tap, the coordinates of the touch position have coordinate values, for example, "(200, 300)", corresponding to the touch position on the upper surface.

In Fig. 16 to Fig. 19, the touch position is represented by specific coordinate values and not by the identification number briefly illustrated in Fig. 15. Various definition methods for the coordinates of the touch position are considered, and coordinates of any definition may be used. For example, the coordinates illustrated by the identification number in Fig. 15 are coordinates corresponding to the intersection of the signal line 68. In addition to these coordinates, for example, plane coordinate information representing two-dimensional coordinates in a case where the solid shape is unfolded in a plane is present as a representation of the coordinates of the touch position in the solid shape. Alternatively, a method of representing the touch position using three-dimensional coordinate information in a case where the solid shape is arranged in a three-dimensional space is also considered. Furthermore, a method of defining a coordinate system for each surface of the solid shape and representing the touch position using in-surface coordinate information related to each surface is considered. For example, in the case of a truncated cone, the in-surface coordinate information includes the in-surface coordinate information related to the upper surface and the in-surface coordinate information related to the side surface. Any of such coordinates may be used as the coordinates of the touch position.

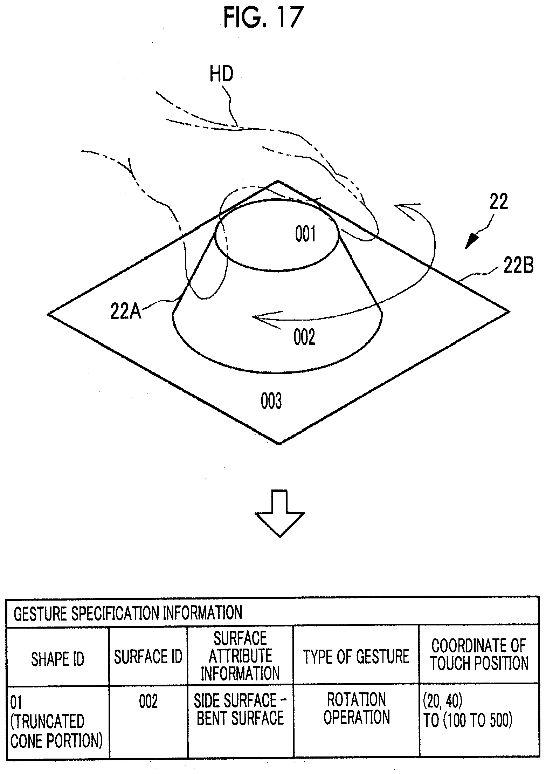

As illustrated in Fig. 17, in a case where the solid region 22 is the truncated cone portion 22A and the gesture operation is the rotation operation with respect to the side surface, the shape ID is "01", and the surface ID is "002" representing the side surface. The surface attribute indicates "side surface" and "bent surface", and the type of gesture operation is the rotation operation. The coordinates of the touch position have coordinate values corresponding to the touch position. In the case of the rotation operation, the coordinates of the touch position are coordinates representing the trajectory of the touch position.

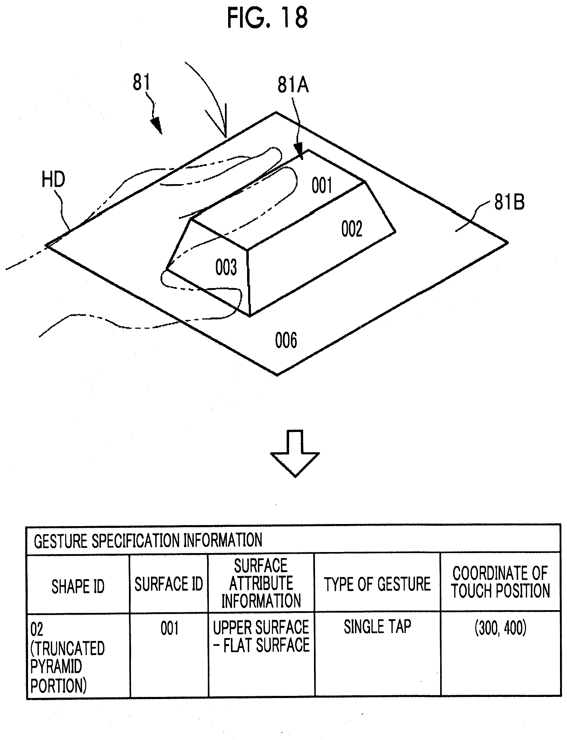

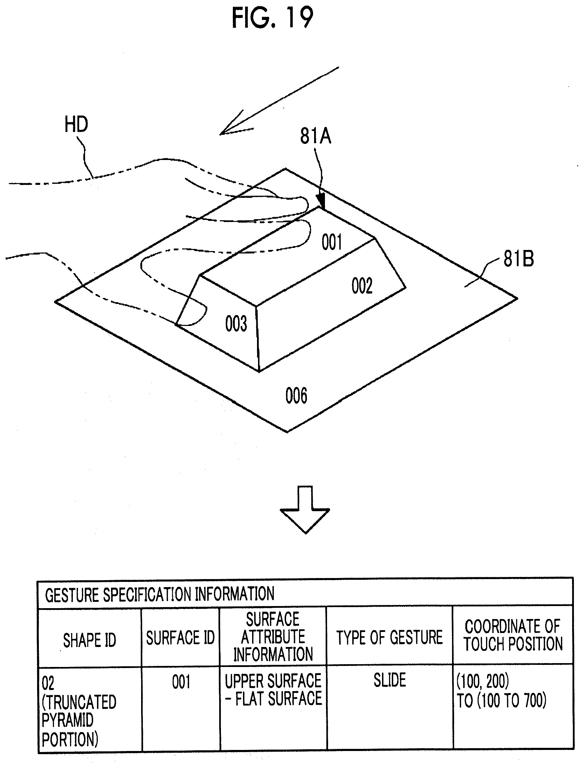

In addition, Fig. 18 and Fig. 19 are examples of the gesture specification information in a case where the solid region is not the truncated cone portion 22A of the present example and is a solid region 81 including a truncated pyramid portion 81A and a flat surface portion 81B. Fig. 18 illustrates the gesture specification information in a case where the single tap is performed on the truncated pyramid portion 81A. In this case, the shape ID is "02" representing the truncated pyramid. The surface attribute information indicates "upper surface" and "flat surface". The type of gesture is the single tap. The coordinates of the touch position are coordinates corresponding to the touch position.

Fig. 19 illustrates the gesture specification information in a case where the slide operation of rubbing the upper surface is performed on the truncated pyramid portion 81A. In this case, the shape ID is "02" representing the truncated pyramid. The surface attribute information indicates "upper surface" and "flat surface". The type of gesture is the slide. The coordinates of the touch position have coordinate values representing the trajectory of the touch position corresponding to the slide.

The gesture determination unit 32A transmits the gesture specification information to the AP interface unit 33.

In Fig. 15, the AP interface unit 33 communicates with the AP execution unit 41 and receives the response information from the application execution unit 41 based on the gesture specification information. In the present example, the AP interface unit 33 transmits the gesture specification information received from the gesture determination unit 32A to the AP execution unit 41. In addition, the AP interface unit 33 transmits the response information from the AP execution unit 41 to the display control unit 32B. The response information includes information related to a response screen displayed on the touch panel 21.

The display control unit 32B controls the display of the touch panel 21 including the solid region 22 based on the response information received from the AP interface unit 33.

The AP execution unit 41 comprises a command determination unit 41A and a response unit 41A. The command determination unit 41A determines an operation command based on the gesture specification information received from the AP interface unit 33. The operation command is an operation signal of the AP assigned to various gesture operations based on the content of the gesture operation.

The memory 42 of the main control device 26 stores a command determination table 72 (72A, 72B, 72C, ...). The command determination table 72 is table data in which a correspondence between the gesture operation such as "single tap", "double tap", and "rotation operation" and the operation command is recorded. The operation command includes "menu call/current location display", "menu selection", "music selection" and the adjustment of "volume" in the AV system, and the adjustment of "airflow amount", "temperature", and the like in the air conditioning system.

For example, an operation command providing an instruction to perform "menu call" or "current location display" to the AP execution unit 41 is assigned to the gesture operation of "double tap". In addition, an operation command of "menu selection" is assigned to the gesture operation of "rotation operation". An operation command providing an instruction to perform "music selection" or the adjustment of "volume", "airflow amount", or "temperature" depending on the selection state of the menu items is assigned to the gesture operation of "lateral stroke".

While the operation command is assigned depending on the type of gesture operation such as the double tap or the rotation operation in the present example, different operation commands may be assigned to the same type of gesture operation depending on the surface on which the touch operation is performed. In this case, for example, different operation commands are assigned to the tap operation with respect to the upper surface and the tap operation with respect to the side surface.

In addition, as illustrated in Fig. 15, the command determination table 72 includes a plurality of command determination tables 72A, 72B, and 72C depending on the shape of the solid region 22. The command determination table 72A is a table used in a case where the touch panel 21 has the solid region 22 including the truncated cone portion 22A having the shape ID "01". The command determination table 72B is a table used in the case of the solid region 81 including the truncated pyramid portion 81A illustrated in Fig. 18 and Fig. 19. The command determination table 72C is a table used in the case of a solid region including a hemisphere portion, not illustrated.

In a case where the shape of the touch panel 21 is a three-dimensional solid shape, the content of the gesture operation including the touch position and the type of gesture operation is complicated unlike the gesture operation with respect to a flat surface panel. The content of the gesture operation also changes in a case where the solid shape varies. Thus, a plurality of command determination tables 72 are prepared depending on the solid shape of the touch panel 21. Each of the command determination tables 72A, 72B, and 72C corresponding to the solid shape is different information depending on the solid shape and thus, is included in the solid shape information.

The shape ID representing the solid shape of the touch panel 21 is recorded as preset information 76 in the memory 42. For example, the preset information 76 is set in a case where the touch panel 21 is mounted with the main control device 26 at the time of manufacturing the automobile. The AP execution unit 41 recognizes the solid shape of the touch panel 21 by referring to the preset information 76.

The command determination unit 41A determines the operation command by referring to the command determination table 72 based on the content of the gesture operation input from the gesture determination unit 32A. The AP execution unit 41 executes each process in each AP of the navigation system, the AV system, and the air conditioning system depending on the operation command determined by the command determination unit 41A.

The response unit 41A generates the response information with respect to the operation command by referring to the command determination table 72. The command determination table 72 includes information related to the response screen as the response information with respect to the operation command. For example, the response information stored in the command determination table 72 is link information to a storage destination of image data of the response screen. The response information is prepared depending on the solid shape of the touch panel 21.

Information related to the response screen for the truncated cone corresponding to the truncated cone portion 22A is recorded in the command determination table 72A. Information related to the response screen for the truncated pyramid corresponding to the truncated pyramid portion 81A is recorded in the command determination table 72B. Information related to the response screen for the hemisphere corresponding to the hemisphere portion is recorded in the command determination table 72C.

In the case of a flat surface panel, only the displayed screen size varies even in a case where the touch panel is changed. Thus, a process of matching the screen size of each touch panel by performing an enlargement or reduction process using the same image data can be performed. Thus, data of one response screen may be enough.

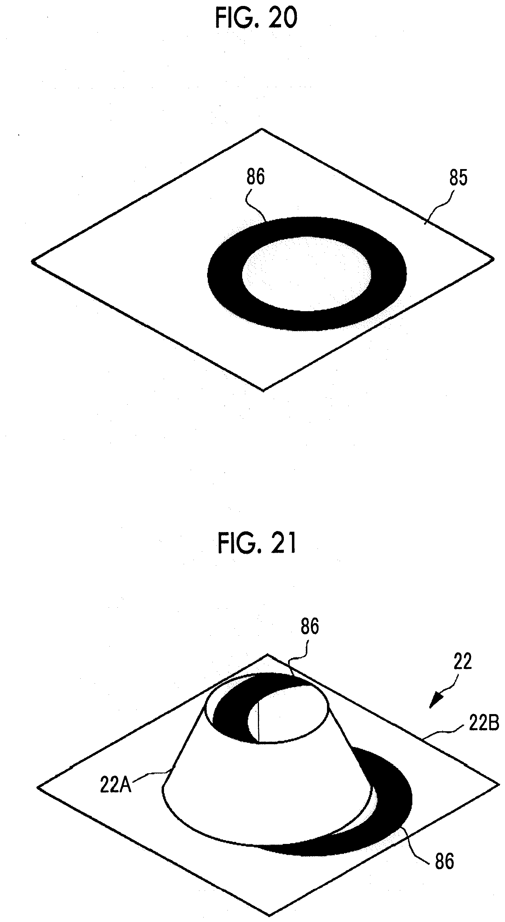

However, for example, as illustrated in Fig. 20 and Fig. 21, in a case where the solid shape varies, the display may not be appropriately performed by simple size change such as enlargement and reduction even in the case of displaying the response screen having the same content. In a case where a ring 86 displayed on a flat surface panel 85 as illustrated in Fig. 20 is displayed on the solid region 22 illustrated in Fig. 21, for example, a process of dividing the ring 86 into a plurality of regions and displaying one part on the upper surface of the truncated cone portion 22A and another part on the flat surface portion 22B may be necessary. In such a case, the display cannot be appropriately performed by simply enlarging or reducing the image.

Therefore, in the console system 10, the response screen corresponding to the solid shape is prepared. The response information includes information related to the response screen depending on the solid shape and, for example, display position information related to a display position of the response screen and indicating the manner of dividing the image of the response screen, the surface of the solid shape on which a part of the response screen is to be displayed, and the part of the response screen to be displayed.

In Fig. 15, the response unit 41A selects the command determination table 72 corresponding to the solid shape of the touch panel 21 based on the preset information 76. In the present example, the preset information 76 is the shape ID "01" representing the truncated cone portion 22A. Thus, the response unit 41A selects the command determination table 72A. The response information used for the truncated cone and corresponding to the operation command is transmitted to the AP interface unit 33 by referring to the selected table 72A. The console device control unit 24 controls each unit based on the received response information. The display control unit 32B changes the display content of the solid region 22 based on the response screen used for the truncated cone and included in the response information.

In addition, the display control unit 32B adjusts the display position and the like of the response screen in a detailed manner based on the surface attribute information as to whether the surface constituting the flat surface portion 22B of the solid region 22 is a flat surface or a slightly curved surface. Accordingly, appropriate display corresponding to the attribute of the surface can be performed.

In addition, the console device control unit 24 performs control for outputting audio from the speaker 23 based on the audio information included in the response information.

The memory 42 stores a plurality of APs executable by the AP execution unit 41. Data of each AP includes the content of the command determination table 72 corresponding to the solid shape and specifically, includes the correspondence between the gesture operation and the operation command and information related to a user interface (UI) including the response screen with respect to the operation command. The information related to the UI includes, for example, UI1 in the case of a typical flat surface panel, UI2 for the truncated cone, UI3 for the truncated pyramid, and UI4 for the hemisphere.

For example, information related to the command determination table 72 corresponding to the solid shape is embedded in advance in the preinstalled AP. A developer of the AP develops an appropriate UI and the like based on the specifications of the solid shape of the solid region of the touch panel manufactured by each maker. Data of the UI and the like are embedded in advance in the AP. Each of the command determination tables 72A, 72B, 72C, ... is loaded into the memory 42 in a case where the AP is installed on the main control device 26. Accordingly, one AP can be adapted to a plurality of solid shapes of the touch panel 21.

The memory 42 stores a plurality of AP1, AP2, .... While illustration is not provided, any of the APs comprises the command determination table 72 corresponding to a plurality of solid shapes.

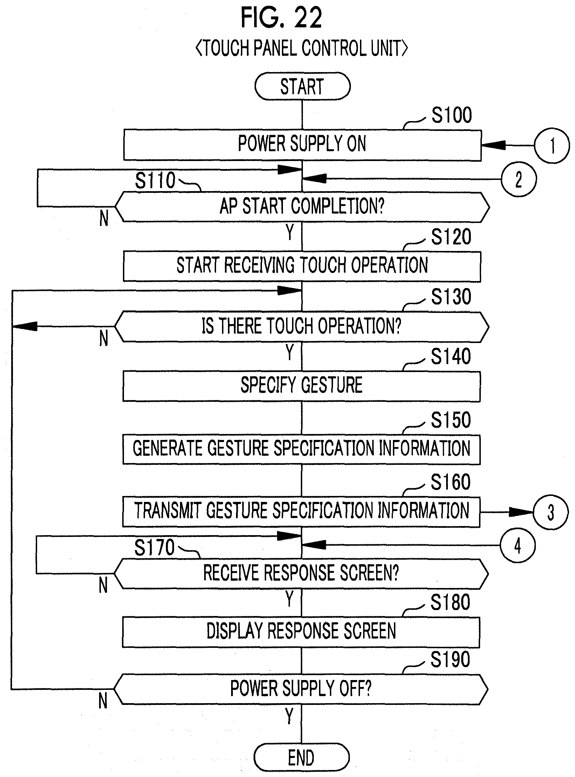

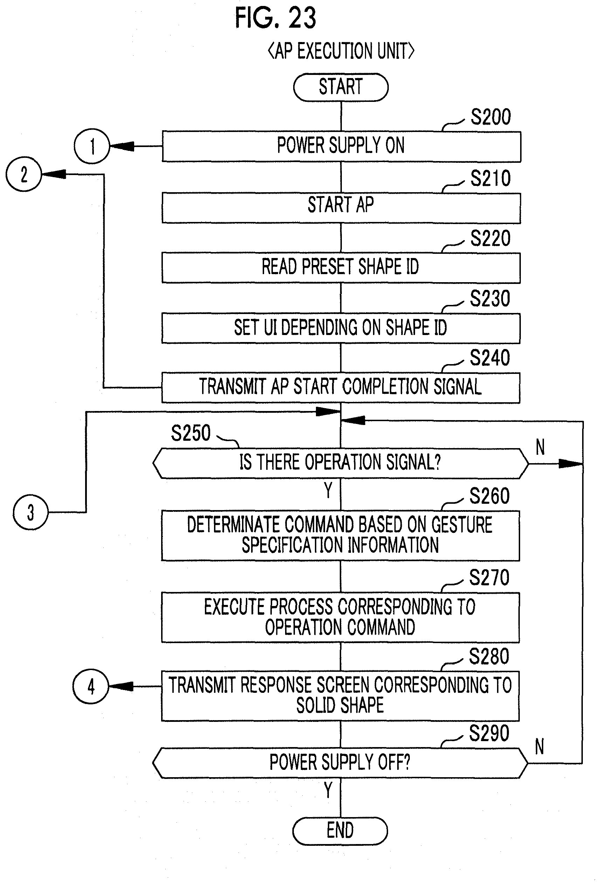

Hereinafter, an effect of the above configuration will be described with reference to the flowcharts illustrated in Fig. 22 and Fig. 23.

In the automobile in which the console system 10 is mounted, in a case where the main switch such as the ignition switch is operated, a power supply of the console system 10 is switched ON. In a case where the power supply is switched ON, a power supply of the main control device 26 including the AP execution unit 41 is switched ON as illustrated in Fig. 23 (step (S) 200), and a power supply of the touch panel control unit 32 is also switched ON as illustrated in Fig. 22 (S100).

As illustrated in Fig. 23, in a case where the power supply is switched ON, the AP execution unit 41 starts the AP (S210). The AP execution unit 41 reads the preset shape ID (S220). The UI of the AP is set depending on the shape ID (S230). In the present example, the shape ID "01" corresponding to the truncated cone portion 22A is read, and the command determination table 72A including the UI for the truncated cone is loaded into the memory 42. Then, an AP start completion signal representing the completion of the start of the AP is transmitted to the touch panel control unit 32 (S240). After the transmission, the AP execution unit 41 waits for the operation signal from the touch panel control unit 32 (S250).

As illustrated in Fig. 22, the touch panel control unit 32 waits for the AP start completion signal after the power supply is switched ON (S110). In a case where the touch panel control unit 32 receives the AP start completion signal (Y in S110), the touch panel control unit 32 transitions to S120 and starts receiving a touch operation. In a case where a touch operation is performed on the solid region 22 (Y in S130), the gesture determination unit 32A of the touch panel control unit 32 refers to the solid shape information table 71 and specifies the content of the gesture operation based on the referred solid shape information (S140). The gesture determination unit 32A generates the gesture specification information as illustrated in Fig. 16 and Fig. 17 (S150). The AP interface unit 33 transmits the gesture specification information received from the gesture determination unit 32A to the AP execution unit 41 (S160).

In Fig. 23, in a case where the AP execution unit 41 receives the gesture specification information as the operation signal (Y in S250), the AP execution unit 41 transitions to S260. In S260, the command determination unit 41A determines the operation command based on the received gesture specification information by referring to the command determination table 72 which is selected depending on the shape ID.

The AP execution unit 41 executes a process corresponding to the determined operation command (S270). The response unit 41A transmits the response screen corresponding to the solid shape and the operation command to the AP interface unit 33 by referring to the command determination table 72 (S280). In the present example, the response unit 41A transmits the response screen for the truncated cone.

In Fig. 22, in a case where the touch panel control unit 32 receives the response screen (Y in S170), the display control unit 32B performs control for displaying the response screen on the solid region 22 (S180). Such a process is repeated until the power supply is switched OFF (Y in S290 and S190).

The touch panel control unit 32 specifies the content of the gesture operation based on the solid shape information related to the touch panel 21, generates the gesture specification information representing the content, and communicates with the AP execution unit 41 based on the generated gesture specification information. The display of the touch panel 21 is controlled based on the response information from the AP execution unit 41. The touch panel control unit 32 comprises the AP interface unit 33 transmitting the gesture specification information generated depending on the solid shape to the AP execution unit 41. Thus, the AP execution unit 41 can perform an appropriate process depending on the solid shape. Thus, adaptation of the plurality of APs executed by the AP execution unit 41 is facilitated.

In addition, in a case where the touch panel control unit 32 comprises the AP interface unit 33 outputting the gesture specification information corresponding to the solid shape, information communicated between a device side such as the touch panel control unit 32 and the AP execution unit 41 is clarified. Thus, for the developer developing the AP, development of the AP matching various solid shapes of the touch panel is facilitated.

By comprising the AP interface unit 33 in the touch type operation apparatus, one touch type operation apparatus is easily adapted to a plurality of APs, or conversely, one AP is easily adapted to a plurality of touch type operation apparatuses. Versatility can be secured.

As described above, the AP execution unit 41 of the present example can execute the AP obtained by external communication in addition to the preinstalled AP. In this case, various APs and various solid shapes of the touch panel are used in combination. In such a case, the touch type operation apparatus of the present example is particularly effective.

In the present example, the AP execution unit 41 can execute the AP downloaded from the AP distribution server 47 through the AP information obtaining unit 43. Besides, for example, an application service provider (ASP) server providing an application service through the Internet 46 may be used as the AP distribution server 47. The AP information obtaining unit 43 may access the ASP server, and the AP execution unit 41 may execute the AP provided as the application service. That is, the AP information obtaining unit 43 and the AP execution unit 41 may be able to use a so-called cloud service.

In such a case, the AP information obtaining unit 43 does not download the whole data of the AP and install the AP on the main control device 26. The AP information obtaining unit 43 communicates with the ASP server in real time and sequentially obtains necessary data related to the AP during the process of the AP execution unit 41. The AP execution unit 41 executes a process based on the sequentially obtained data related to the AP. In this case, for example, the AP information obtaining unit 43 and the AP execution unit 41 as a platform for executing the AP are provided with the application service of the ASP server using a web browser.

In addition, the AP information obtaining unit 43 may obtain the AP depending on the solid shape. In this case, the AP information obtaining unit 43 transmits the preset shape ID to the AP distribution server 47. The AP distribution server 47 extracts the AP based on the shape ID and distributes the AP to the AP information obtaining unit 43. By doing so, the AP information obtaining unit 43 can download the AP corresponding to the solid shape of the touch panel 21. In addition, in the same manner as the provision of the application service from the ASP server, the main control device 26 can be provided with the application service corresponding to the solid shape by causing the AP information obtaining unit 43 to transmit the solid shape to the ASP server.

In addition, the installation of the AP may not be performed through the Internet 46. The AP may be installed on the main control device 26 through removable media such as a Universal Serial Bus (USB) memory or by performing short range wireless communication with a smartphone. The USB memory and the short range wireless communication are included in the external communication.

In addition, in the present example, for example, the shape ID for identifying the solid shape, the surface ID for identifying the outer peripheral surface constituting the solid shape, the surface attribute information representing the attribute of the outer peripheral surface, the coordinates of the touch position based on the wiring of the signal line 68 in a matrix shape, and the like are described as the solid shape information. Besides, any information that can specify the content of the gesture operation with respect to the touch sensor having the solid shape may be used as the solid shape information. For example, the plane coordinate information in the case of unfolding the solid shape in a plane, the three-dimensional coordinate information related to the solid shape, and the like may be used. In addition, the information which can specify the content of the gesture operation does not need to include all of the kinds of solid shape information and may include at least one thereof.

### "Second Embodiment"

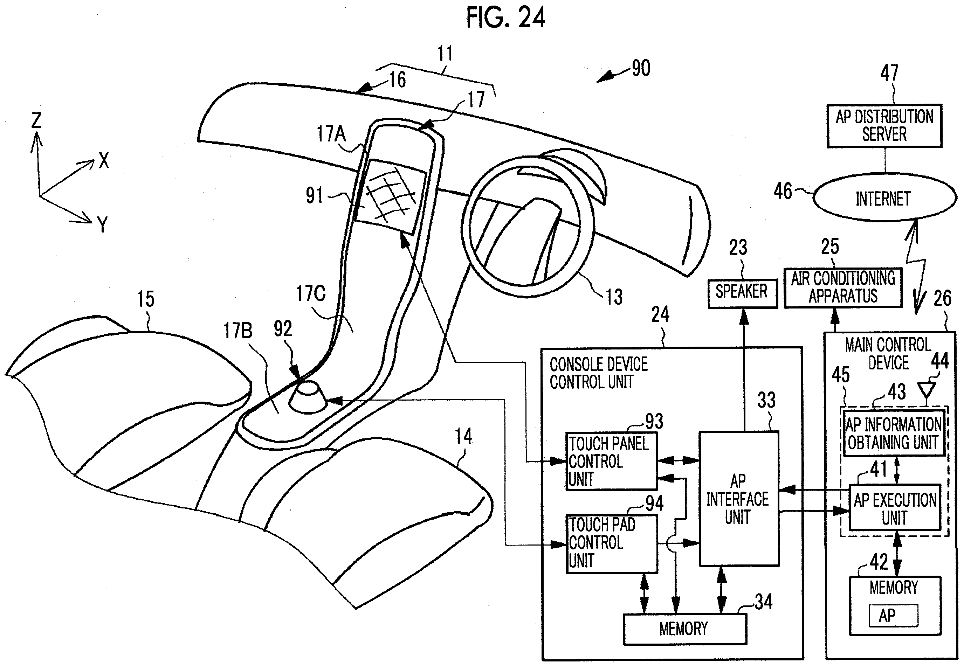

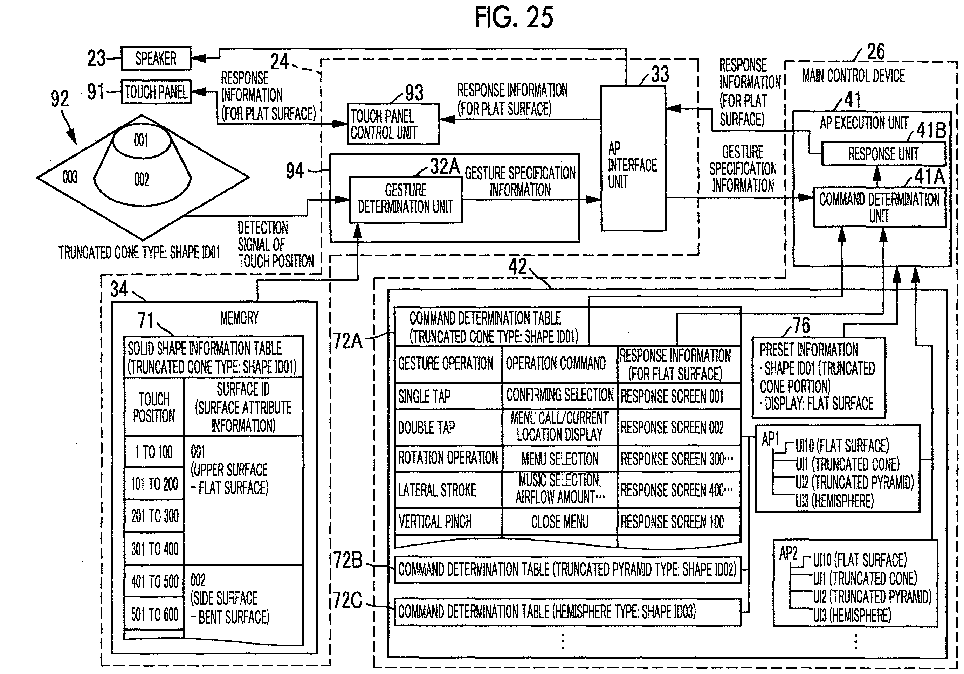

In a console system 90 of a second embodiment illustrated in Fig. 24 and Fig. 25, a touch panel 91 is disposed as a display separately from the touch sensor having a three-dimensional solid shape. As illustrated in Fig. 24, in the console system 90 of the second embodiment, a touchpad 92 comprising the touch sensor does not have a display function, and display is performed in a flat surface touch panel 91. Other points are the same as the first embodiment. Thus, hereinafter, differences will be mainly described. The same parts will be designated by the same reference signs, and descriptions of such parts will not be repeated.

As illustrated in Fig. 25, in the console device control unit 24, a touchpad control unit 94 is disposed instead of the touch panel control unit 32 of the first embodiment. In addition, a touch panel control unit 93 controlling the touch panel 91 is comprised separately from the touchpad control unit 94. Since the touch panel 91 is a flat surface panel, the touch panel control unit 93 is the same as a touch panel control unit in the related art. The touch panel control unit 93 corresponds to a display control unit.

In Fig. 25, the touchpad control unit 94 comprises the gesture determination unit 32A in the same manner as the first embodiment. The solid shape information table 71 is also the same as the first embodiment. In addition, the main control device 26 is almost the same as the first embodiment. As differences, the touch panel 91 does not have a solid shape and includes a flat surface. Thus, information representing that the display is a flat surface is added as the preset information 76. In addition, in the command determination table 72A, while the response information is used for the truncated cone in the first embodiment, the response information in the present example is changed to be used for the flat surface. Other configurations are the same as the first embodiment.

In a case where the gesture determination unit 32A receives the detection signal from the touchpad 92 having a truncated cone solid shape, the gesture determination unit 32A specifies the content of the gesture operation by referring to the solid shape information table 71. The gesture specification information is generated. The gesture specification information is transmitted to the AP execution unit 41 from the AP interface unit 33. In a case where the AP execution unit 41 receives the gesture specification information as the operation signal, the AP execution unit 41 determines the operation command by referring to the command determination table 72. The AP execution unit 41 transmits the response information corresponding to the operation command to the AP interface unit 33. Since the touch panel 91 is a flat surface panel, the response information includes information related to the response screen for the flat surface. The touch panel control unit 93 controls the display of the touch panel 91 based on the received response information.

Even in the case of using a flat surface panel as the touch panel 91, the screen may be a curved surface by curving the flat surface panel. In that case, as described above, it is preferable to adjust information related to the response screen for the flat surface in a detailed manner such that appropriate display is performed on the curved surface.

### "Third Embodiment"

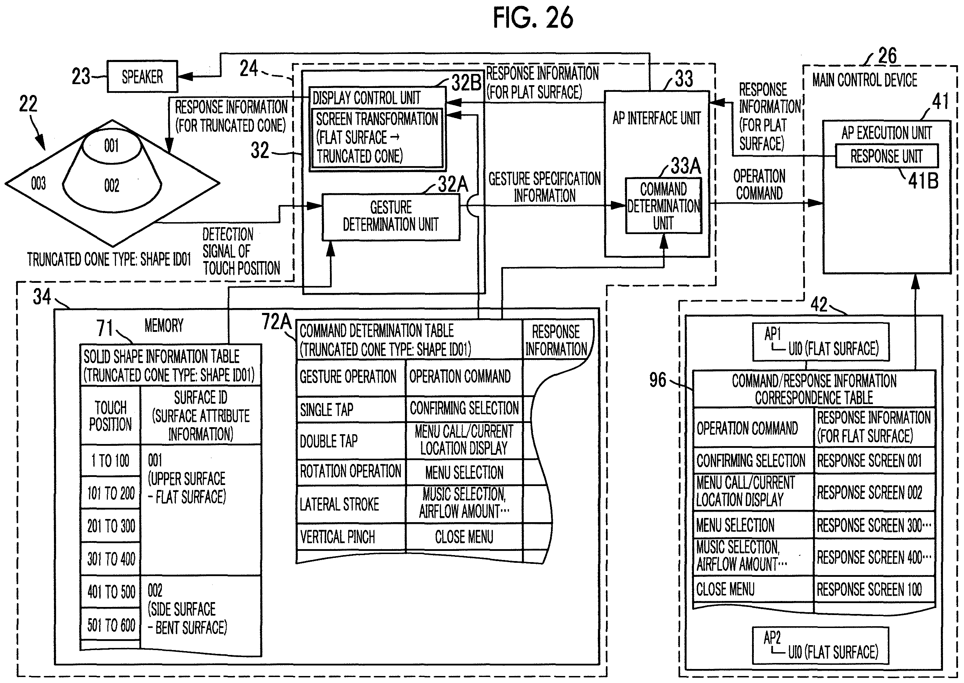

A third embodiment illustrated in Fig. 26 to Fig. 28 is a modification example of the first embodiment. In the first embodiment, the AP execution unit 41 determines the operation command based on the gesture specification information received from the AP interface unit 33. Meanwhile, in the third embodiment, the determination of the operation command is performed by the AP interface unit 33 and not by the AP execution unit 41. Hereinafter, differences will be mainly described.

A command determination unit 33A is disposed in the AP interface unit 33. The command determination table 72 is stored in the memory 34 on the device side including the solid region 22 and not in the memory 42 of the main control device 26. Only the command determination table 72A for the truncated cone corresponding to the shape of the solid region 22 is stored as the command determination table 72.

An AP including only a UI0 for the flat surface is installed on the main control device 26. The memory 42 stores a command/response information correspondence table 96 storing the correspondence between the operation command and the response information. The response information for the flat surface is recorded in the table 96. In the third embodiment, the AP execution unit 41 does not recognize the shape of the solid region 22 and executes processing regardless of the shape of the solid region 22 by regarding the solid region 22 as a touch panel of a typical flat surface panel.

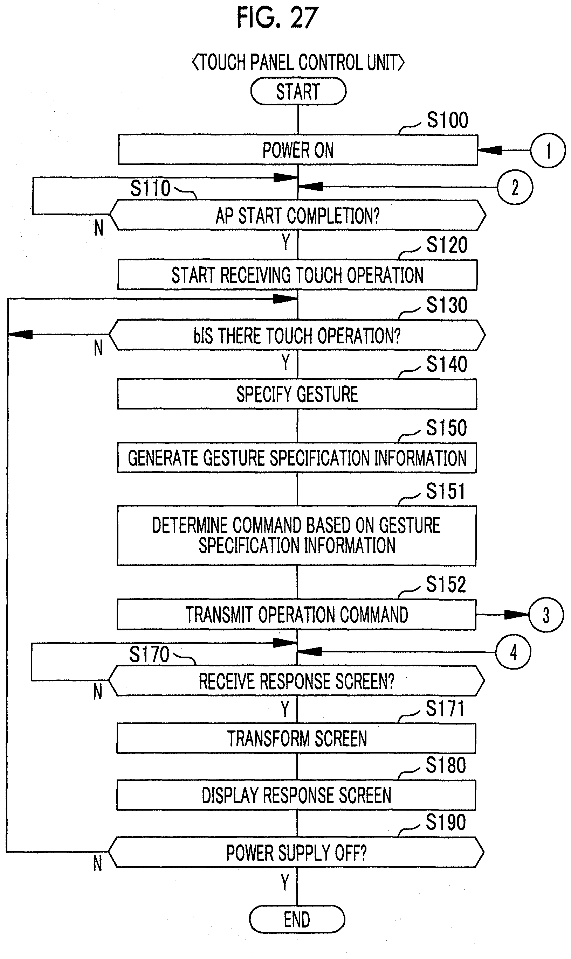

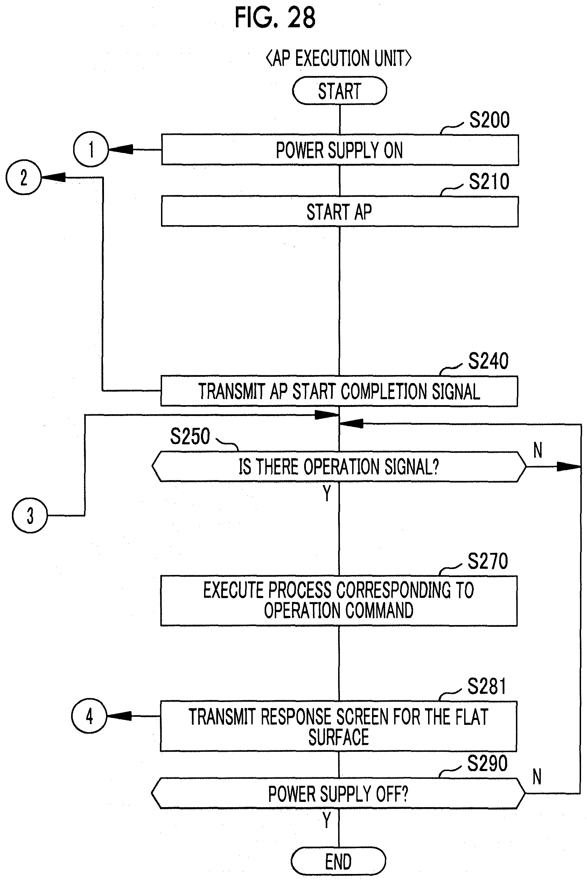

In the flowcharts of the third embodiment illustrated in Fig. 27 and Fig. 28, S200, S210, S240, and S250 in Fig. 28 are the same as the steps of the first embodiment in Fig. 23. In the third embodiment, the AP includes only the response information for the flat surface. Thus, in Fig. 28, steps corresponding to S220 and S230 of the first embodiment are not present. In addition, S100 to S150 in Fig. 27 are the same as the steps of the first embodiment in Fig. 22.

In S151 in Fig. 27, the AP interface unit 33 receives the gesture specification information from the gesture determination unit 32A. The command determination unit 33A determines the operation command by referring to the command determination table 72A based on the received gesture specification information. Since the command determination table 72A corresponds to the solid shape information, the command determination unit 33A of the AP interface unit 33 determines the operation command with respect to the AP based on the gesture specification information and the solid shape information. The AP interface unit 33 transmits the determined operation command to the AP execution unit 41 (S152). In the third embodiment, the AP interface unit 33 does not transmit the gesture specification information unlike the first embodiment. The command determination is performed in the command determination unit 33A, and the AP interface unit 33 transmits the determined operation command to the AP execution unit 41.

In S250 in Fig. 28, the AP execution unit 41 receives the operation command as the operation signal (Y in S250). The AP execution unit 41 executes a process corresponding to the operation command without performing the command determination unlike the first embodiment (S270). The response unit 41A transmits the response screen for the flat surface to the AP interface unit 33 as the response information corresponding to the operation command (S281).

In S170 in Fig. 27, in a case where the touch panel control unit 32 receives the response screen for the flat surface (Y in S170), the display control unit 32B executes screen transformation processing of transforming the response screen for the flat surface into a response screen corresponding to the solid shape of the solid region 22 (S171). The display control unit 32B reads information related to the response screen used for the truncated cone and corresponding to the operation command by referring to the command determination table 72A. The display of the solid region 22 is controlled based on the read response screen for the truncated cone (S180). The above process is repeated until the power supply is switched OFF (Y in S290 and S190).

The response screen corresponding to the solid shape is one kind of solid shape information. As described above, the solid region 22 of the touch panel 21 comprises the display 70 which is integrated with the touch sensor 69 and has the same solid shape as the solid shape of the touch sensor 69. Thus, in the third embodiment, the display control unit 32B performs display control by performing the screen transformation processing corresponding to the solid shape of the display 70 integrated with the touch sensor 69. For example, as illustrated in Fig. 20 and Fig. 21, the screen transformation processing is transformation processing for an image displayed on a flat surface panel to be appropriately displayed on a display region having a solid shape.

In the third embodiment, the command determination and the screen transformation corresponding to the solid shape of the touch panel 21 are performed on the device side comprising the touch panel 21 and the touch panel control unit 32. The AP execution unit 41 does not recognize the solid shape of the touch panel 21. Thus, the AP can be developed without considering the solid shape of the touch panel 21. In addition, even in a case where the touch panel 21 has any solid shape, the existing AP can be used. In the same manner as the first embodiment, even in the third embodiment, one touch type operation apparatus is easily adapted to a plurality of APs, or conversely, one AP is easily adapted to a plurality of touch type operation apparatuses. Versatility can be secured.

### "Fourth Embodiment"

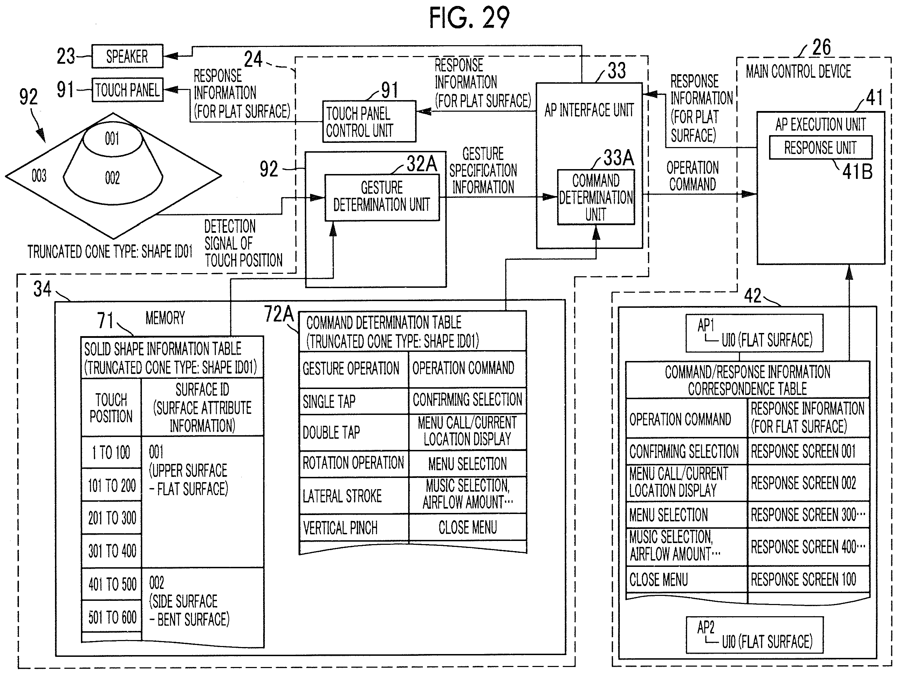

A fourth embodiment illustrated in Fig. 29 is obtained by applying the configuration of the third embodiment to the second embodiment. That is, differences from the third embodiment are that the touchpad 92 comprising the touch sensor is comprised instead of the solid region 22, and the flat surface touch panel 91 is included separately from the touchpad 92. In the fourth embodiment, the flat surface touch panel 91 is used unlike the third embodiment. Thus, the screen transformation processing is not performed in the touch panel 91. Thus, the response information corresponding to the solid shape is not necessary in the command determination table 72A. Other configurations of the fourth embodiment are the same as the third embodiment.

### "Fifth Embodiment"

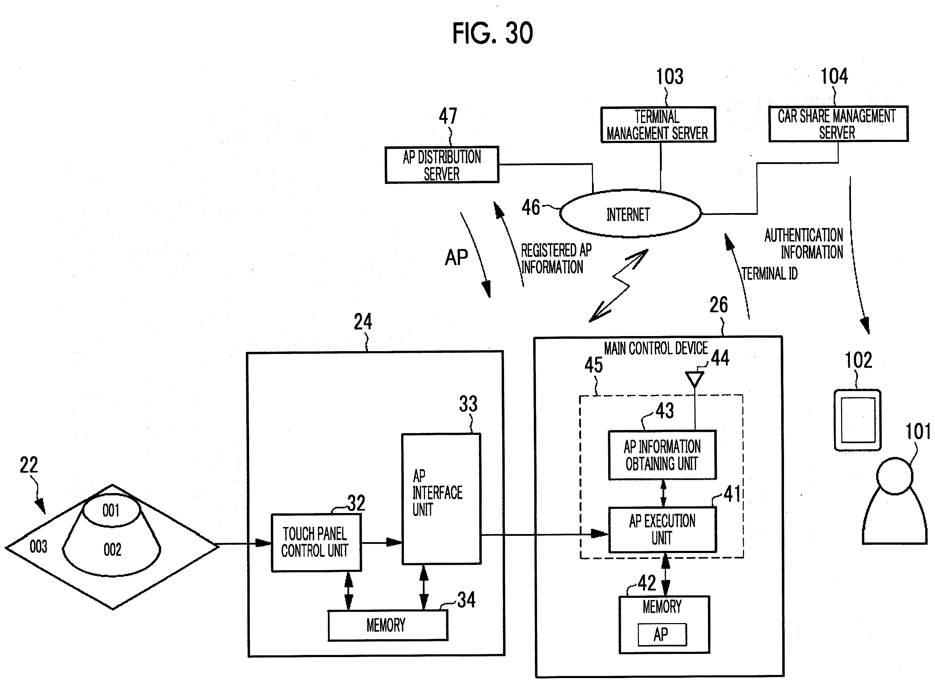

A fifth embodiment illustrated in Fig. 30 is a modification example of an information processing system configured with the touch type operation apparatus of each embodiment described above and the main control device 26. The fifth embodiment is an application example in a case where an automobile in which the information processing system is mounted is used in car sharing.

A user 101 using car sharing feels comfortable in a case where an AP of a smartphone 102 used daily by the user 101 can be used in the automobile used in car sharing. The AP information obtaining unit 43 of the fifth embodiment comprises a function of communicating with the smartphone 102 of the user 101 and downloading the AP used in the smartphone 102 in a case where user authentication is performed in the automobile.

The user 101 using car sharing makes a reservation for car sharing on a reservation site provided by a car share management server 104 through the smartphone 102 and obtains authentication information. The user 101 unlocks the automobile using the obtained authentication information and enters the automobile. At this point, by consent of the user 101, the AP information obtaining unit 43 refers to the authentication information by accessing the smartphone 102 and confirms that the user 101 is the user 101 having a reservation for car sharing. The AP information obtaining unit 43 obtains a terminal ID of the smartphone 102 and obtains installed registered AP information by accessing a terminal management server 103 managing information related to the AP installed on the smartphone 102. The AP information obtaining unit 43 downloads the same AP as the obtained registered AP information by accessing the AP distribution server 47.

By doing so, the user 101 can use the daily used AP in the automobile used in car sharing. Not all APs used in the smartphone 102 can be used in the automobile. Thus, the solid shape information may be transmitted to the AP distribution server 47 from the AP information obtaining unit 43 based on the preset information 76, and the usable AP may be extracted using the solid shape information in the AP distribution server 47.

### "Sixth Embodiment"

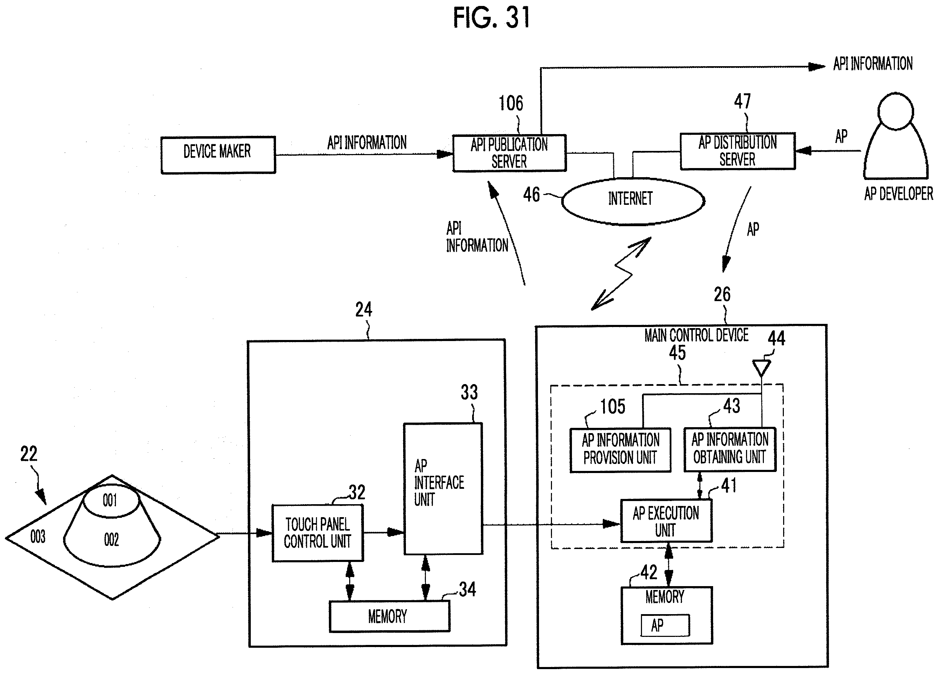

An information processing system of a sixth embodiment illustrated in Fig. 31 is a configuration for the AP developer to easily develop the AP usable in the console system 10. An application programming interface (API) information provision unit 105 is disposed in the main control device 26. The API information provision unit 105 uploads the solid shape information corresponding to the solid shape of the solid region 22 to an API publication server 106 through the Internet 46. The API publication server 106 publishes the uploaded solid shape information to the AP developer as API information. By using such a system, the AP developer easily develops the AP corresponding to various solid shapes of the touch panel 21. The API publication server 106 may also be provided with the API information from device makers such as a maker manufacturing the touch type operation apparatus and an automobile maker.

### (Specification Information Included in Solid Shape Information)

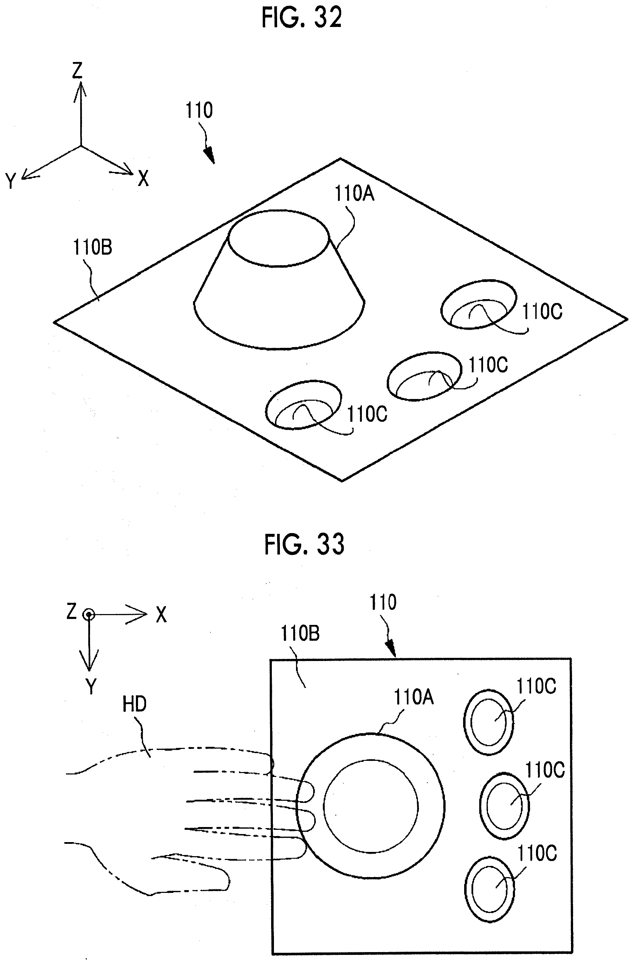

In the case of providing the solid shape information as the API information, it is preferable to include specification information illustrated in Fig. 32 to Fig. 34 in the solid shape information.

As illustrated in Fig. 32 and Fig. 33, a case where a solid region 110 is present in the touch panel 21 is considered. The solid region 110 comprises a truncated cone portion 110A, a flat surface portion 110B, and a plurality of recessed portions 110C. The rough solid shape region of the touch sensor includes a protruding region and also a recessed region such as the recessed portion 110C. As a touch operation with respect to the recessed portion 110C, a touch operation such as pushing the finger of the hand HD of the operator into each recessed portion 110C is considered.

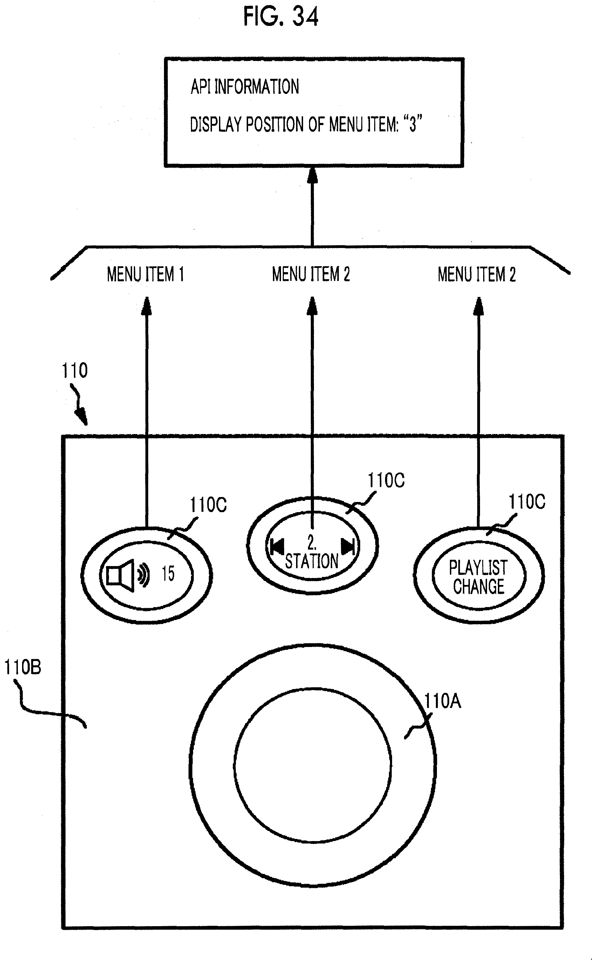

As illustrated in Fig. 34, for example, a volume adjustment function, a music selection function, and a playlist change function which are menu items of the AV system are assigned to the recessed portions 110C. In the case of the solid region 110, it is preferable that the specification information indicating that the number of operation regions to which the menu items are assigned is three is provided as the API information. Even in a case where the solid shape of the touch sensor is not known, perceiving the number of operation regions to which the menu items are assigned enables the AP developer to create the AP in accordance with the number of operation regions. Thus, the AP developer feels comfortable. For example, in a case where the number of operation regions to which the menu items are assigned can be perceived, the number of operation regions is used as information contributing to development of an easily usable AP such that the operation regions are used for frequently used menu items.

The specification information is also effective in a case where the AP does not recognize the solid shape of the touch sensor as in the third embodiment and the fourth embodiment. Even in a case where the solid shape varies like the truncated cone, the truncated pyramid, and the hemisphere, the AP appropriate for the solid shapes can be developed in a case where the number of operation regions to which the menu items are assigned does not change.

While an example in which the touch type operation apparatus is mounted in the automobile is described above, the apparatus in which the touch type operation apparatus is mounted may not be the automobile. For example, the touch type operation apparatus may be applied to home appliances such as a refrigerator. A case where a touch sensor or a touch panel having a three-dimensional solid shape is used in an operation panel of a refrigerator is considered.

In the home appliances such as a refrigerator, in a case where the AP is downloaded from the AP distribution server 47, the download may be performed as follows. For example, in the AP distribution server 47, the AP is registered by storing a correspondence between a model number of the refrigerator and the AP. The AP information obtaining unit 43 mounted in the refrigerator transmits the model number of the refrigerator to the AP distribution server 47 in the case of downloading the AP. The AP distribution server 47 extracts an AP usable in the refrigerator based on the received model number and distributes the AP to the AP information obtaining unit 43. By doing so, the AP corresponding to the solid shape of the operation panel of the refrigerator can be downloaded. In addition, the model number of the refrigerator may be read using a short range wireless communication function of the smartphone. The model number of the refrigerator may be transmitted to the AP distribution server 47 from the smartphone, and the AP may be downloaded. The AP may be transferred to the refrigerator from the smartphone.

In each embodiment described above, for example, a hardware structure of processing units executing various processes like the console device control unit 24, the touch panel control unit 32, the gesture determination unit 32A, the command determination unit 41A, the display control unit 32B, and the AP interface unit 33 correspond to various processors as follows.

The various processors include a central processing unit (CPU), a programmable logic device (PLD), a dedicated electric circuit, and the like. The CPU is a versatile processor functioning as various processing units by executing software (operation program) as previously known. The PLD is a processor such as a field programmable gate array (FPGA) capable of changing a circuit configuration after manufacturing. The dedicated electric circuit is a processor having a circuit configuration such as an application specific integrated circuit (ASIC) dedicatedly designed to execute a specific process.

One processing unit may be configured with one of the various processors or may be configured with a combination of two or more processors of the same kind or different kinds (for example, a plurality of FPGAs or a combination of the CPU and the FPGA). In addition, a plurality of processing units may be configured with one processor. A first example of configuring a plurality of processing units with one processor is such that one processor is configured with a combination of one or more CPUs and software, and the processor functions as a plurality of processing units. A second example is such that as represented by a system on chip (SoC) or the like, a processor that implements the function of the whole system including the plurality of processing units using one integrated circuit (IC) is used. Various processing units are configured using one or more of the various processors as a hardware structure.

Furthermore, the hardware structure of the various processors is more specifically circuitry in which circuit elements such as a semiconductor element are combined.

Touch type operation apparatuses disclosed in the following appendix can be perceived from the above disclosure.

### "Appendix 1"

A touch type operation apparatus comprising a touch sensor having a three-dimensional solid shape, a solid shape information obtaining processor that accesses a storage unit storing solid shape information related to the solid shape of the touch sensor and obtains the solid shape information, a gesture specification information generation processor that specifies a content of a gesture operation performed with respect to the touch sensor based on the solid shape information and generates gesture specification information representing the specified content of the gesture operation, an application program interface processor that communicates with an application execution unit executing an application program which uses the touch sensor as an input apparatus based on the gesture specification information and receives response information from the application execution unit, and a display control processor that controls display of a display based on the received response information.

### "Appendix 2"

An information processing system using a touch type operation apparatus, the system comprising the touch type operation apparatus, and an application program execution processor that executes an application program which uses the touch type operation apparatus as an input apparatus, in which the touch type operation apparatus comprises a touch sensor having a three-dimensional solid shape, a solid shape information obtaining processor that accesses a storage unit storing solid shape information related to the solid shape of the touch sensor and obtains the solid shape information, a gesture specification information generation processor that specifies a content of a gesture operation performed with respect to the touch sensor based on the solid shape information and generates gesture specification information representing the specified content of the gesture operation, an application program interface processor that communicates with an application execution unit executing an application program which uses the touch sensor as an input apparatus based on the gesture specification information and receives response information from the application execution unit, and a display control processor that controls display of a display based on the received response information.

The present invention is not limited to each embodiment described above and may employ various configurations without departing from the nature of the present invention. In addition, the above various embodiments and various modification examples can be appropriately combined. In addition, the present invention includes a program and a storage medium storing the program.

## Claims

1. A touch type operation apparatus comprising
a touch sensor having a three-dimensional solid shape;
a solid shape information obtaining unit that accesses a storage unit storing solid shape information related to the solid shape of the touch sensor and obtains the solid shape information;
a gesture specification information generation unit that specifies a content of a gesture operation performed with respect to the touch sensor based on the solid shape information and generates gesture specification information representing the specified content of the gesture operation;
an application program interface unit that communicates with an application execution unit executing an application program which uses the touch sensor as an input apparatus based on the gesture specification information and receives response information from the application execution unit; and
a display control unit that controls display of a display based on the received response information.

2. The touch type operation apparatus according to claim 1,
wherein the application execution unit executes an application program obtained by external communication or executes an application program provided as an application service from a server.

3. The touch type operation apparatus according to claim 1 or 2,
wherein the application program interface unit transmits the gesture specification information to the application execution unit.

4. The touch type operation apparatus according to claim 3,
wherein the display is integrated with the touch sensor and has the same solid shape as the touch sensor, and
the display control unit performs the display control by performing transformation processing corresponding to the solid shape of the display on the response information received from the application execution unit.

5. The touch type operation apparatus according to claim 3 or 4,
wherein the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and
the response information includes information related to a response screen displayed as a processing result of processing executed by the application execution unit based on the gesture specification information and display position information related to a display position of the response screen.

6. The touch type operation apparatus according to claim 5,
wherein the solid shape information further includes outer peripheral surface attribute information representing whether the outer peripheral surface is a flat surface or a curved surface.

7. The touch type operation apparatus according to claim 1 or 2,
wherein the application program interface unit determines an operation command with respect to the application program based on the gesture specification information and the solid shape information and transmits the operation command to the application execution unit.

8. The touch type operation apparatus according to claim 7,
wherein the display is integrated with the touch sensor and has the same solid shape as the touch sensor, and
the display control unit performs the display control by performing transformation processing corresponding to the solid shape of the display on the response information received from the application execution unit.

9. The touch type operation apparatus according to claim 7 or 8,
wherein the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and
the response information includes information related to a response screen displayed as a processing result of processing executed by the application execution unit based on the operation command and display position information related to a display position of the response screen.

10. The touch type operation apparatus according to claim 9,
wherein the solid shape information further includes outer peripheral surface attribute information representing whether the outer peripheral surface is a flat surface or a curved surface.

11. An information processing system using a touch type operation apparatus, the system comprising:
the touch type operation apparatus; and
an application program execution unit that executes an application program which uses the touch type operation apparatus as an input apparatus,
wherein the touch type operation apparatus comprises
a touch sensor having a three-dimensional solid shape,
a solid shape information obtaining unit that accesses a storage unit storing solid shape information related to the solid shape of the touch sensor and obtains the solid shape information;
a gesture specification information generation unit that specifies a content of a gesture operation performed with respect to the touch sensor based on the solid shape information and generates gesture specification information representing the specified content of the gesture operation;
an application program interface unit that communicates with an application execution unit executing an application program which uses the touch sensor as an input apparatus based on the gesture specification information and receives response information from the application execution unit; and
a display control unit that controls display of a display based on the received response information.

12. The information processing system using the touch type operation apparatus according to claim 11, further comprising:
an application information obtaining unit that accesses a server distributing the application program or a server providing the application program as an application service and obtains the application program or information related to the application program.

13. The information processing system using the touch type operation apparatus according to claim 11 or 12,
wherein the solid shape information includes at least one of a shape ID for identifying the solid shape, a surface ID for identifying a plurality of outer peripheral surfaces constituting the solid shape, plane coordinate information in a case where the solid shape is unfolded in a plane, or three-dimensional coordinate information related to the solid shape, and
the response information includes information related to a response screen displayed as a processing result of processing executed by the application execution unit based on an operation command and display position information related to a display position of the response screen.

14. The information processing system using the touch type operation apparatus according to claim 13, further comprising:
an API information provision unit that provides the solid shape information to an API publication server publishing application program interface information to a developer developing the application program.

15. An operation method of a touch type operation apparatus comprising a touch sensor having a three-dimensional solid shape, the method comprising:
a solid shape information obtaining step of accessing a storage unit storing solid shape information related to the solid shape of the touch sensor and obtaining the solid shape information;
a gesture specification information generation step of specifying a content of a gesture operation performed with respect to the touch sensor based on the solid shape information and generating gesture specification information representing the specified content of the gesture operation;
a communication step of communicating with an application execution unit executing an application program which uses the touch sensor as an input apparatus based on the gesture specification information and receiving response information from the application execution unit; and
a display control step of controlling display of a display based on the received response information.

16. An operation program of a touch type operation apparatus comprising a touch sensor having a three-dimensional solid shape, the program comprising:
a solid shape information obtaining step of accessing a storage unit storing solid shape information related to the solid shape of the touch sensor and obtaining the solid shape information;
a gesture specification information generation step of specifying a content of an operation gesture performed with respect to the touch sensor based on the solid shape information and generating specified gesture specification information;
a communication step of communicating with an application execution unit executing an application program which uses the touch sensor as an input apparatus based on the gesture specification information and receiving response information from the application execution unit; and
a display control step of controlling display of a display based on the received response information.
